(19) Europäisches Patentamt
European Patent Office
Office européen des brevets

(11) EP 2 169 747 A1

(12) **EUROPEAN PATENT APPLICATION**
published in accordance with Art. 153(4) EPC

(43) Date of publication:
**31.03.2010 Bulletin 2010/13**

(21) Application number: **08777214.1**

(22) Date of filing: **13.06.2008**

(51) Int Cl.:
***H01M 4/86*** *(2006.01)* ***H01M 8/02*** *(2006.01)*
***H01M 8/10*** *(2006.01)*

(86) International application number:
**PCT/JP2008/060903**

(87) International publication number:
**WO 2008/153152 (18.12.2008 Gazette 2008/51)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 JP 2007159469**

(71) Applicant: **Sumitomo Chemical Company, Limited**
**Tokyo 104-8260 (JP)**

(72) Inventors:
- **KURODA, Ryuma**
**Komatsu-shi**
**Ishikawa 932-0832 (JP)**
- **KURITA, Hiroyuki**
**Tsukuba-shi**
**Ibaraki 305-0045 (JP)**
- **SHINODA, Hiroshi**
**Niihama-shi**
**Ehime 792-0002 (JP)**
- **SAITO, Shin**
**Tsukuba-shi**
**Ibaraki 305-0822 (JP)**

(74) Representative: **Vossius & Partner**
**Siebertstraße 4**
**81675 München (DE)**

# (54) MEMBRANE-ELECTRODE ASSEMBLY, AND MEMBRANE-ELECTRODE-(GAS DIFFUSION LAYER) ASSEMBLY AND SOLID POLYMER FUEL CELL EACH COMPRISING THE SAME

(57) A membrane-electrode assembly 1 having an anode catalyst layer 20 and a cathode catalyst layer 30 which are mutually opposing and a polymer electrolyte membrane 10 formed between the anode catalyst layer 20 and cathode catalyst layer 30, wherein the anode catalyst layer 20 has a plurality of polymer layers 20a, 20b containing a polymer in which a repeating unit (a) with an ion-exchange group and a repeating unit (b) with no ion-exchange group are arranged in a random or block fashion, and the polymer in the polymer layer 20a in closest proximity to the polymer electrolyte membrane 10 is the polymer with the lowest block character of the repeating units (a) and (b).

*Fig.1*

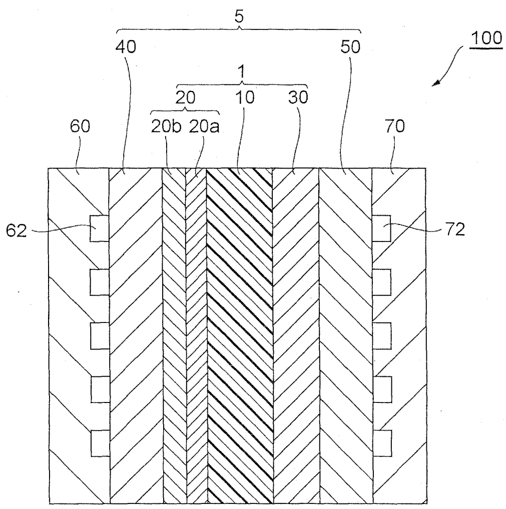


EP 2 169 747 A1

## Description

### Technical Field

The present invention relates to a membrane-electrode assembly, and to a membrane-electrode-gas diffusion layer assembly and solid polymer fuel cell comprising it.

### Background Art

Depletion of petroleum resources is currently a serious problem, while consumption of fossil fuels is also exacerbating environmental problems such as air pollution and global warming. Because of this situation, fuel cells have become an object of interest as clean electric power sources that do not emit carbon dioxide, and some have begun to come into practical use.

Solid polymer fuel cells employing polymer electrolyte membranes are receiving attention as fuel cells for use in automobiles, because they can easily produce high voltage and high current. The known electrode structures used in such solid polymer fuel cells are membrane electrode assemblies (hereinafter as referred to as "MEA") and membrane-electrode-gas diffusion layer assemblies (hereinafter also referred to as "MEGA").

A MEA comprises a polymer electrolyte membrane with proton conductivity and a pair of catalyst layers formed on the main sides of the polymer electrolyte membrane sandwiching the polymer electrolyte membrane. The catalyst layers comprise a catalyst substance such as platinum, a support such as carbon black that supports the catalyst substance, and a polymer that retains the support.

A MEGA comprises the MEA mentioned above, and a pair of gas diffusion layers on the sides of the catalyst layers opposite their contact surfaces with the polymer electrolyte membrane, sandwiching the MEA. A solid polymer fuel cell further comprises a pair of separators as gas passageways on the sides of the gas diffusion layers opposite their contact surfaces with the catalyst layers, sandwiching the MEGA.

In a solid polymer fuel cell, one of the catalyst layers functions as the anode catalyst layer (fuel electrode) while the other catalyst layer functions as the cathode catalyst layer (oxygen electrode). A fuel gas such as hydrogen or methanol is introduced from the anode side separator through the anode side gas diffusion layer into the anode catalyst layer. Also, an oxidant gas such as air or oxygen is introduced from the cathode side separator through the cathode side gas diffusion layer into the cathode catalyst layer.

In the anode catalyst layer, action of the catalyst in the anode catalyst layer produces protons ($H^+$) and electrons from the fuel gas (hydrogen). The protons are transferred into the cathode catalyst layer through the polymer electrolyte membrane. The action of the catalyst in the cathode catalyst layer causes the protons to react with the oxidant gas (oxygen) introduced into the cathode catalyst layer and with the electrons, producing water. Thus, electrical connection between the anode catalyst layer and cathode catalyst layer forms a circuit in which electrons produced in the anode catalyst layer are conducted to the cathode catalyst layer, thus producing a current.

Various methods have been proposed for fabricating MEAs, such as a method in which a catalyst layer formed on a support is thermocompression bonded with a polymer electrolyte membrane and the support is then released, a method in which a catalyst ink comprising a catalyst and a polymer electrolyte is cast onto a polymer electrolyte membrane, and a method in which a similar catalyst ink is coated onto a polymer electrolyte membrane by spraying or the like to form a catalyst layer. Each catalyst layer of the MEA formed by such a method will usually have a single-layer structure with a simple composition.

Various techniques are currently being proposed for catalyst layer structures aimed at enhancing solid polymer fuel cell performance. For example, it has been proposed to decrease the electrolyte content on the gas diffusion layer side of the catalyst layer to increase the reactive sites on the gas diffusion layer side of the catalyst layer, varying the electrolyte content in the thickness direction (see Patent document 1, for example), or varying the polymer electrolyte concentration in the direction of the reactive gas port, i.e. the in-plane direction of the catalyst layer, to prevent variation in the moisture distribution of the catalyst layer (see Patent document 2, for example).

It has also been proposed to add a large amount of polymer electrolyte to the polymer electrolyte membrane side of the catalyst layer, in order to create an electrical conductivity/proton conductivity gradient in the thickness direction of the catalyst layer (see Patent document 3, for example).

[Patent document 1] Japanese Unexamined Patent Publication HEI No. 9-180730
[Patent document 2] Japanese Unexamined Patent Publication No. 2002-151090
[Patent document 3] Japanese Unexamined Patent Publication No. 2005-259525

**Disclosure of the Invention**

Problems to be Solved by the Invention

However, the electric power generation performance of solid polymer fuel cells is still insufficient even when using the catalyst layers described in Patent documents 1-3, and further improvement is desired. Furthermore, variation in the polymer electrolyte concentration in the in-plane direction (gas passage direction) of the catalyst layer as in Patent document 2 increases the complexity of the production process for the membrane-electrode assembly, and is not desirable in practice. The electric power generation performance of the solid polymer fuel cell can usually be improved by reducing the overvoltage of the catalyst layer and lowering the cell resistance, which is ohmic resistance.

It is therefore an object of the present invention to provide a membrane-electrode assembly with satisfactorily excellent electric power generation performance that is easy to produce, as well as a membrane-electrode-gas diffusion layer assembly and a solid polymer fuel cell comprising it.

Means for Solving the Problems

The present inventors have conduced much research on structures of membrane electrode assemblies with the aim of improving the electric power generation performance of solid polymer fuel cells. As a result of diligent research focusing on the composition of the anode catalyst layer, it was found that it is effective for the molecular structure of the polymer to vary in the thickness direction of the anode catalyst layer, and the invention has been completed upon this finding.

Specifically, the invention provides a membrane-electrode assembly comprising an anode catalyst layer and a cathode catalyst layer which are mutually opposing and a polymer electrolyte membrane formed between the anode catalyst layer and cathode catalyst layer, wherein the anode catalyst layer comprises a plurality of polymer layers containing a polymer in which a repeating unit (a) with an ion-exchange group and a repeating unit (b) with no ion-exchange group are arranged in a random or block fashion, and the polymer in the polymerization layer in closest proximity to the polymer electrolyte membrane is the polymer with the lowest block character of the repeating units (a) and (b).

This construction is based on the knowledge of the present inventors in regard to specifying the structure of the anode catalyst layer while maintaining the moisture content of the polymer electrolyte membrane. Such a membrane-electrode assembly can be easily produced because it has a structure comprising a plurality of polymer layers.

In the membrane-electrode assembly of the invention, it is preferred for polymer layers containing polymers with lower block character of the repeating units (a) and (b) to be situated closer to the polymer electrolyte membrane.

Using such an anode catalyst layer will further inhibit release of moisture from the anode catalyst layer into the fuel gas phase. This can still further inhibit reduction in the moisture content of the polymer electrolyte membrane. The internal resistance of the polymer electrolyte membrane will thus be further lowered, allowing a membrane-electrode assembly with even more excellent electric power generation performance to be obtained.

According to the invention there is also provided a membrane-electrode assembly comprising an anode catalyst layer and a cathode catalyst layer which are mutually opposing and a polymer electrolyte membrane formed between the anode catalyst layer and cathode catalyst layer, wherein the anode catalyst layer comprises a plurality of polymer layers containing a random copolymer in which a repeating unit (a) with an ion-exchange group and a repeating unit (b) with no ion-exchange group are arranged in a random fashion and/or a block copolymer in which the repeating units (a) and (b) are arranged in a block fashion, and the polymer layer in closest proximity to the polymer electrolyte membrane is the polymer layer containing the greatest amount of random copolymer.

In the anode catalyst layer of the membrane-electrode assembly of the invention, it is preferred for polymer layers containing more of the random copolymer to be situated closer to the polymer electrolyte membrane.

Using such an anode catalyst layer will further inhibit release of moisture from the anode catalyst layer into the fuel gas phase. This can still further inhibit reduction in the moisture content of the polymer electrolyte membrane. The internal resistance of the polymer electrolyte membrane will thus be further lowered, allowing a membrane-electrode assembly with even more excellent electric power generation performance to be obtained.

The membrane-electrode assembly of the invention also preferably has 2 polymer layers in the anode catalyst layer.

This will allow a membrane-electrode assembly with even more excellent electric power generation performance to be produced more easily.

The repeating unit (a) in the membrane-electrode assembly of the invention is preferably represented by the following general formula (1).

[Chemical Formula 1]

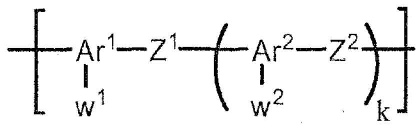 (1)

In formula (1), k represents 0 or 1, $Z^1$ and $Z^2$ each independently represent a direct bond or a divalent group, and $Ar^1$ and $Ar^2$ each independently represent a divalent aromatic group. This is with the provision that hydrogens in the divalent aromatic group are optionally replaced with optionally substituted C1-20 alkyl, optionally substituted C1-20 alkoxy, optionally substituted C6-20 aryl, optionally substituted C6-20 aryloxy or optionally substituted C2-20 acyl. Also, $w^1$ and $w^2$ each independently represent hydrogen or an ion-exchange group. This is with the provision that at least one of $w^1$ and $w^2$ is an ion-exchange group.

Including a polymer with such a repeating unit (a) will allow a membrane-electrode assembly with more sufficiently excellent electric power generation performance to be obtained.

The repeating unit (b) in the membrane-electrode assembly of the invention is preferably represented by the following general formula (2).

[Chemical Formula 2]

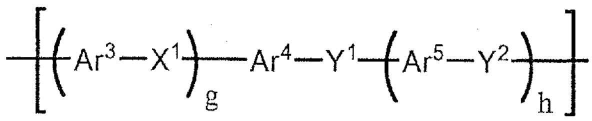 (2)

In formula (2), g and h each independently represent 0 or 1, $X^1$, $Y^1$ and $Y^2$ each independently represent a direct bond or a divalent group, and $Ar^3$, $Ar^4$ and $Ar^5$ each independently represent a divalent aromatic group. This is with the provision that the hydrogens in the divalent aromatic groups are optionally replaced with optionally substituted C1-20 alkyl, optionally substituted C1-20 alkoxy, optionally substituted C6-20 aryl, optionally substituted C6-20 aryloxy or optionally substituted C2-20 acyl. Including a polymer with such a repeating unit (b) will allow a membrane-electrode assembly with more sufficiently excellent electric power generation performance to be obtained.

The polymer electrolyte membrane composing the membrane-electrode assembly of the invention is preferably a polymer electrolyte membrane comprising a hydrocarbon-based polymer electrolyte. By using such a polymer electrolyte membrane it is possible to obtain a membrane-electrode assembly with even more excellent electric power generation performance. A polymer electrolyte membrane comprising a hydrocarbon-based polymer electrolyte also has the advantage of excellent heat resistance and mechanical strength compared to polymer electrolyte membranes comprising fluorine-based polymer electrolytes, which have been primarily used in the prior art.

According to the invention there is further provided a membrane-electrode-gas diffusion layer assembly comprising the aforementioned membrane-electrode assembly, an anode side gas diffusion layer formed on the side of the anode catalyst layer opposite the polymer electrolyte membrane side, and a cathode side gas diffusion layer formed on the side of the cathode catalyst layer opposite the polymer electrolyte membrane side.

Such a membrane-electrode-gas diffusion layer assembly comprises a membrane-electrode assembly having the characteristics described above, and therefore has sufficiently excellent electric power generation performance and can be easily produced.

According to the invention there is further provided a solid polymer fuel cell characterized by comprising the aforementioned membrane-electrode-gas diffusion layer assembly, an anode side separator formed on the side of the anode side gas diffusion layer opposite the anode catalyst layer side, and a cathode side separator formed on the side of the cathode side gas diffusion layer opposite the cathode catalyst layer side.

Such a solid polymer fuel cell comprises a membrane-electrode assembly and a membrane-electrode-gas diffusion layer assembly having the characteristics described above, and therefore has sufficiently excellent electric power generation performance and can be easily produced.

## Effect of the Invention

According to the invention it is possible to provide a membrane-electrode assembly with satisfactorily excellent electric power generation performance that is easy to produce, as well as a membrane-electrode-gas diffusion layer

assembly and a solid polymer fuel cell each comprising it.

## Brief Description of the Drawings

Fig. 1 is a schematic cross-sectional view showing the structure of a membrane-electrode assembly according to a first embodiment of the invention, as well as a membrane-electrode-gas diffusion layer assembly and solid polymer fuel cell comprising it.
Fig. 2 is a schematic cross-sectional view showing the structure of a membrane-electrode assembly according to a second embodiment of the invention, as well as a membrane-electrode-gas diffusion layer assembly and solid polymer fuel cell comprising it.

Explanation of Symbols

1, 2: MEA, 5, 6: membrane-electrode-gas diffusion layer assemblies, 10: polymer electrolyte membrane, 20, 22: anode catalyst layers, 30: cathode catalyst layer, 40: anode side gas diffusion layer, 50: cathode side gas diffusion layer, 60: anode side separator, 70: cathode side separator, 62: fuel gas fluid channel, 72: oxidant gas fluid channel, 20a, 20b, 22a, 22b, 22c, 22d: polymer layers, 100, 200: solid polymer fuel cells.

## Best Mode for Carrying Out the Invention

Preferred embodiments of the invention will now be explained with reference to the accompanying drawings where necessary. Throughout the explanation of the drawings, identical or corresponding elements will be referred to by like reference numerals and will be explained only once.
Fig. 1 is a schematic cross-sectional view showing the structure of a membrane-electrode assembly according to a first embodiment of the invention, as well as a membrane-electrode-gas diffusion layer assembly and solid polymer fuel cell comprising it. In the solid polymer fuel cell 100 there are laminated an anode side separator 60, membrane-electrode-gas diffusion layer assembly 5 and cathode side separator 70 in that order. In the membrane-electrode-gas diffusion layer assembly 5 there are laminated an anode side gas diffusion layer 40 in contact with the anode side separator 60, a MEA 1, and a cathode side gas diffusion layer 50 in contact with the cathode side separator 70 in that order. In the MEA 1 there are laminated an anode side catalyst layer 20 in contact with the anode side gas diffusion layer 40, a polymer electrolyte membrane 10, and a cathode catalyst layer 30 in contact with the cathode side gas diffusion layer 50 in that order. So long as the object of the invention is not significantly impeded, another layer such as a porous layer with a water-repellent property may be provided between the gas diffusion layers and the catalyst layer, on either or both the cathode side and anode side.
The anode catalyst layer 20 comprises a polymer layer 20a and a polymer layer 20b, laminated in the direction of lamination of the solid polymer fuel cell 100. The polymer layer 20a is situated in contact with the polymer electrolyte membrane 10, and the polymer layer 20b is situated in contact with the anode side gas diffusion layer 40.
Preferably, the thickness of the polymer electrolyte membrane 10 is 10-50 μm, the thicknesses of the anode catalyst layer 20 and cathode catalyst layer 30 are 6-40 μm, and the thicknesses of the anode side gas diffusion layer 40 and cathode side gas diffusion layer 50 are 30-500 μm. The thicknesses of the polymer layer 20a and polymer layer 20b are preferably each 3-37 μm. If the thickness of either of the polymer layer 20a or polymer layer 20b is less than 6 μm, the content of water released into the fuel gas phase may not be sufficiently reduced.
The polymer layer 20a and polymer layer 20b composing the anode catalyst layer each comprise a catalyst substance and a polymer. The polymer is a copolymer of a repeating unit (a) with an ion-exchange group and a repeating unit (b) with no ion-exchange group. The catalyst substance is preferably used in the form of a catalyst-supported body having carbon black or the like supported on a support, as mentioned above. In this case, it is important for the support and the polymer to be present in a suitable proportion so that the electrode reaction can take place efficiently. If the weight ratio of the support with respect to the polymer is too low the ionic conductivity will tend to be reduced, while if it is too high the catalytic activity may be lowered or the electron conductivity may be reduced. The weight ratios of the total support weights with respect to the total polymers in the polymer layer 20a and polymer layer 20b are preferably the same, and are preferably 0.05-1.0.
For this embodiment, the polymer layer 20a on the polymer electrolyte membrane 10 side has a lower block character than the polymer layer 20b on the anode side gas diffusion layer side. The term "block character" is an index representing the irregularity of the arrangement of monomers in the copolymerization pattern of the polymer, and a method for its quantification by the following equation (3) is known, as described in references (Adachi, K., "Polymer Science, OnePoint-2 polymer controlled structures", The Society of Polymer Science, Japan, p.14-15, Kyoritsu Publish-

ing, February 15, 1993).

[Equation 1]

$$\alpha = \frac{P_2(AB)}{P_1(A) \times P_1(B)} \qquad (3)$$

In general formula (3), A represents the repeating unit (a) with an ion-exchange group, B represents the repeating unit (b) with no ion-exchange group, $P_1(A)$ and $P_1(B)$ represent the respective probabilities of A and B appearing when one repeating unit in the polymer has been removed, and $P_2(AB)$ represents the probability of an A-B chain appearing when two contiguous repeating units in the polymer have been removed. The value of $\alpha$ calculated by general formula (3) represents the block character of the polymer (polymer layer).

For a random copolymer in which A and B are arranged in a random fashion, $P_2(AB)$ and $P_1(A) \times P_1(B)$ will tend to be equal and $\alpha$ will approach 1. On the other hand, for a block copolymer in which A and B are arranged in a block fashion, $P_2(AB)$ will tend to approach 0, and $\alpha$ will therefore also approach 0. That is, the block character of the polymer tends to increase as $\alpha$ calculated by general formula (3) approaches 0, and the block character of the polymer tends to decrease as $\alpha$ approaches 1.

For this embodiment, the polymer in the polymer layer 20b has a higher block character than the polymer in the polymer layer 20a. In other words, the weight ratio $\beta$, for a block copolymer in which the blocks composed of the repeating unit (a) with an ion-exchange group (hereinafter also referred to as "block a") and the blocks composed of the repeating unit (b) with no ion-exchange group (hereinafter also referred to as "block b") are arranged in a block fashion, with respect to the entire polymer for the polymer layer 20b, is larger than that weight ratio $\beta$ for the polymer layer 20a.

The solid polymer fuel cell 100 according to this embodiment can be easily produced since the anode catalyst layer 20 is composed of two layers, the polymer layer 20a and the polymer layer 20b. The production process will be described below.

The anode side gas diffusion layer 40 and cathode side gas diffusion layer 50 are constructed of known materials. Specifically, they may be formed of a porous material comprising a conducting material such as carbon. For example, porous carbon woven fabric or carbon paper is preferred from the viewpoint of efficient transport of fuel gas or oxidant gas into the catalyst layers.

The anode side separator 60 and cathode side separator 70 are also constructed of known materials. Specifically, there may be mentioned carbon, resin mold carbon, titanium and stainless steel. The anode side separator 60 has a fuel gas fluid channel 62 and the cathode side separator 70 has an oxidant gas fluid channel 72.

Fig. 2 is a schematic cross-sectional view showing the structure of a membrane-electrode assembly according to a second embodiment of the invention, as well as a membrane-electrode-gas diffusion layer assembly and solid polymer fuel cell comprising it. In the solid polymer fuel cell 200 there are laminated an anode side separator 60, membrane-electrode-gas diffusion layer assembly 6 and cathode side separator 70 in that order. In the membrane-electrode-gas diffusion layer assembly 6 there are laminated an anode side gas diffusion layer 40 in contact with the anode side separator 60, a MEA 2, and a cathode side gas diffusion layer 50 in contact with the cathode side separator 70 in that order. In the MEA 2 there are laminated an anode side catalyst layer 22 in contact with the anode side gas diffusion layer 40, a polymer electrolyte membrane 10, and a cathode catalyst layer 30 in contact with the cathode side gas diffusion layer 50 in that order. So long as the object of the invention is not significantly impeded, another layer such as a porous layer with a water-repellent property may be provided between the gas diffusion layers and the catalyst layer, on either or both the cathode side and anode side.

The membrane-electrode assembly 2, membrane-electrode-gas diffusion layer assembly 6 and solid polymer fuel cell 200 according to this embodiment differs from the first embodiment described above in that the anode catalyst layer 22 is composed of 4 polymer layers, polymer layer 22a, polymer layer 22b, polymer layer 22c and polymer layer 22d.

The anode catalyst layer 22 comprises a polymer layer 22a, a polymer layer 22b, a polymer layer 22c and a polymer layer 22d (polymer layers 22a-22d) laminated in the direction of lamination of the solid polymer fuel cell 200. The polymer layers 22a-22d are laminated in the order: polymer layers 22a, 22b, 22c, 22d, from the polymer electrolyte membrane 10 side toward the anode side gas diffusion layer 40 side. That is, the polymer layer 22a is in contact with the polymer electrolyte membrane 10, and the polymer layer 22d is in contact with the anode side gas diffusion layer 40.

If the block characters $\alpha$ of each of the polymers in the polymer layers 22a-22d are represented as $\alpha_{22a}$, $\alpha_{22b}$, $\alpha_{22c}$ and $\alpha_{22d}$ ($\alpha_{22a}$-$\alpha_{22d}$), respectively, then they are preferably in the relationship represented by inequality (4) below.

$$\alpha_{22a} < \alpha_{22b} < \alpha_{22c} < \alpha_{22d} \quad (4)$$

This can further inhibit release of moisture from the anode catalyst layer 22 into the fuel gas phase of the anode side gas diffusion layer 40, thus further inhibiting reduction in the moisture content of the polymer electrolyte membrane 10. The magnitude relationship between the weight ratios $\beta$ in the polymer layers 22a-22d is the same as the magnitude relationship between the block characters $\alpha$.

Even if the relationship of inequality (4) is not satisfied, the effect of the invention can be obtained so long as the block character of the polymer in one of the polymer layers 22b-22d is higher than the block character of the polymer in the polymer layer 22a.

The thicknesses of the polymer layers 22a-22d are preferably 3-37 $\mu$m from the viewpoint of facilitating diffusion of the reactive gas. If the thickness of any of the polymer layers 22a-22d is less than 3 $\mu$m, the content of moisture released into the fuel gas phase of the anode side gas diffusion layer 40 may not be sufficiently inhibited, and if any thickness is greater than 37 $\mu$m, the greater diffusion length for reactive gas in the anode catalyst layer 22 will tend to lower the catalyst reaction efficiency.

The anode catalyst layer 22 is composed of 4 polymer layers in this embodiment, but the number of polymer layers may be increased for a construction with 5 or more polymer layers. The upper limit for the number of polymer layers is not particularly restricted, but it is preferably no greater than 5 and more preferably no greater than 3 as the practical range. As mentioned above, however, the number of polymer layers composing the anode catalyst layer 22 is more preferably 2 as in the first embodiment described above, in consideration of facilitating production of the anode catalyst layer.

The polymer layer composition will now be explained.

Each polymer layer comprises a polymer and a catalyst substance. As catalyst substances there may be mentioned those conventionally included in catalyst layers, such as platinum or platinum-containing alloys such as platinum-ruthenium alloy. As mentioned above, from the viewpoint of facilitating transport of hydrogen ions and electrons in the catalyst layer it is preferred to employ a catalyst supported body comprising a catalyst substance supported on the surface of a support made of a conducting material such as carbon black.

As supports there may be used a conductive carbon materials such as carbon black mentioned above or carbon nanotubes, or a ceramic material such as titanium oxide. Conductive carbon materials are preferred among these. The conductive carbon material may be a carboxylated carbon material treated with a carboxyl compound, or a sulfonated carbon material treated with a sulfonating compound. A water-repellent material such as polytetrafluoroethylene may also be added to improve the water-repellency of the catalyst layer. For increased gas diffusion of the catalyst layer, a pore-forming material such as calcium carbonate may also be included. For increased durability of the MEA, a stabilizer such as metal oxide or the like may further be included.

The polymer included in the polymer layer will now be described. The polymer is a proton-conductive polymer of a repeating unit (a) with an ion-exchange group and a repeating unit (b) with no ion-exchange group. The ion-exchange group may be either an acidic group or basic group, but it is preferably an acidic group from the viewpoint of obtaining a membrane-electrode assembly with more excellent electric power generation performance.

Examples of acidic groups include sulfonic acid ($-SO_3H$), carboxyl ($-COOH$), phosphonic acid ($-PO(OH)_2$), sulfonylimide ($-SO_2NHSO_2-$) and phenolic hydroxyl (-Ph(OH), where Ph represents a phenyl group). Sulfonic acid and phosphonic acid groups are preferred among these, with sulfonic acid groups being more preferred.

From the viewpoint of obtaining a solid polymer fuel cell with even more excellent electric power generation performance, the block copolymer in the polymer layer preferably contains a repeating unit (a) with an ion-exchange group represented by general formula (1) above. From the viewpoint of obtaining a solid polymer fuel cell with yet more excellent electric power generation performance, the polymer preferably contains a repeating unit (b) with no ion-exchange group represented by general formula (2) above.

As examples of divalent aromatic groups for $Ar^1$ and $Ar^2$ in general formula (1) and $Ar^3$, $Ar^4$ and $Ar^5$ in general formula (2), there may be mentioned divalent monocyclic aromatic groups such as 1,3-phenylene and 1,4-phenylene, divalent fused cyclic aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl and 2,7-naphthalenediyl, and divalent aromatic heterocyclic groups such as pyridinediyl, quinoxalinediyl and thiophenediyl. Divalent monocyclic aromatic groups are preferred among these.

As examples of C1-20 alkyl groups as substituents in $Ar^1$-$Ar^5$ of general formulas (1) and (2) there may be mentioned C1-20 alkyl groups such as methyl, ethyl, n-propyl, isopropyl, n-butyl, sec-butyl, isobutyl, n-pentyl, 2,2-dimethylpropyl, cyclopentyl, n-hexyl, cyclohexyl, 2-methylpentyl, 2-ethylhexyl, nonyl, dodecyl, hexadecyl, octadecyl and eicosyl. For the substituents in $Ar^1$ or $Ar^2$ of general formula (1), there may be mentioned alkyl groups with a total of up to C20, wherein at least one of the hydrogens of the alkyl groups may be replaced with one or more groups selected from among fluorine, hydroxyl, nitrile, amino, methoxy, ethoxy, isopropyloxy, phenyl, naphthyl, phenoxy and naphthyloxy.

As examples of C1-20 alkoxy groups for substituents in $Ar^1$-$Ar^5$ of general formulas (1) and (2) there may be mentioned C1-20 alkoxy groups such as methoxy, ethoxy, n-propyloxy, isopropyloxy, n-butyloxy, sec-butyloxy, tert-butyloxy, isobutyloxy, n-nentyloxy, 2,2-dimethylpropyloxy, cyclopentyloxy, n-hexyloxy, cyclohexyloxy, 2-methylpentyloxy, 2-ethylhexyloxy, dodecyloxy, hexadecyloxy and eicosyloxy. For the substituents in $Ar^1$ or $Ar^2$ of general formula (1), there may be mentioned alkoxy groups with a total of up to C20, wherein at least one of the hydrogens of the alkoxy groups may be replaced with one or more groups selected from among fluorine, hydroxyl, nitrile, amino, methoxy, ethoxy, isopropyloxy, phenyl, naphthyl, phenoxy and naphthyloxy.

As examples of C6-20 aryl groups for substituents in $Ar^1$-$Ar^5$ of general formulas (1) and (2) there may be mentioned aryl groups such as phenyl, naphthyl, phenanthrenyl and anthracenyl. For the substituents in $Ar^1$ or $Ar^2$ of general formula (1), there may be mentioned aryl groups with a total of up to C20, wherein at least one of the hydrogens of the aryl groups may be replaced with one or more groups selected from among fluorine, hydroxyl, nitrile, amino, methoxy, ethoxy, isopropyloxy, phenyl, naphthyl, phenoxy and naphthyloxy.

As examples of C6-20 aryloxy groups for substituents in $Ar^1$-$Ar^5$ of general formulas (1) and (2) there may be mentioned aryloxy groups such as phenoxy, naphthyloxy, phenanthrenyloxy and anthracenyloxy. For the substituents in $Ar^1$ or $Ar^2$ of general formula (1), there may be mentioned aryloxy groups with a total of up to C20, wherein at least one of the hydrogens of the aryloxy groups may be replaced with one or more groups selected from among fluorine, hydroxyl, nitrile, amino, methoxy, ethoxy, isopropyloxy, phenyl, naphthyl, phenoxy and naphthyloxy.

As examples of C2-20 acyl groups for substituents in $Ar^1$-$Ar^5$ of general formulas (1) and (2) there may be mentioned acyl groups such as acetyl, propionyl, butyryl, isobutyryl, benzoyl, 1-naphthoyl and 2-naphthoyl. For the substituents in $Ar^1$ or $Ar^2$ of general formula (1), there may be mentioned acyl groups with a total of up to C20, wherein at least one of the hydrogens of the acyl groups may be replaced with one or more groups selected from among fluorine, hydroxyl, nitrile, amino, methoxy, ethoxy, isopropyloxy, phenyl, naphthyl, phenoxy and naphthyloxy.

At least one of $Ar^1$ and $Ar^2$ in general formula (1) has an ion-exchange group on the aromatic ring. The ion-exchange group may be directly bonded to the aromatic ring, or it may be bonded to the aromatic ring via a linking group as in any of the following in general formula (5). That is, $w^1$ and $w^2$ in general formula (1) may be groups comprising a linking group and an ion-exchange group represented by any of the following in general formula (5).

[Chemical Formula 3]

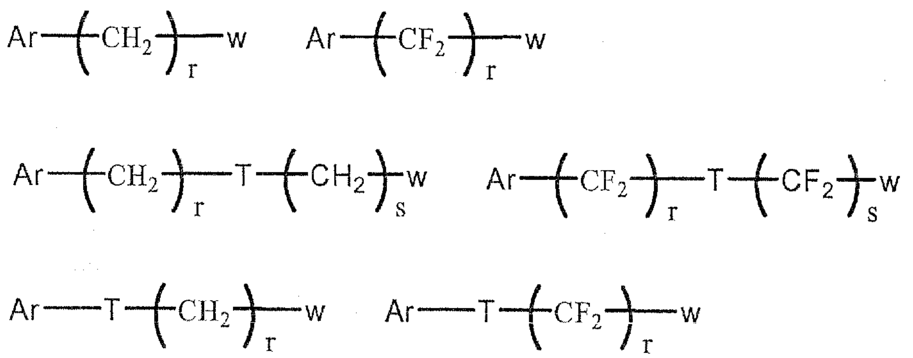

(5)

Ar in general formula (5) above represents $Ar^1$ or $Ar^2$ in general formula (1), w represents an ion-exchange group, r and s each independently represent an integer of 0-12, and T represents one group selected from among -O-, -S-, -CO- and $-SO_2-$.

As examples for the repeating unit (b) with no ion-exchange group represented by general formula (2) above, there may be mentioned A-1-A-14, B1-B14, C-1-C-12 and D1-D6 below. Also, as the repeating unit (a) with an ion-exchange group represented by general formula (1) there may be mentioned the repeating units of A-1-A-14, B1-B14, C-1-C-12 or D1-D6 wherein at least one of the hydrogens bonded to the aromatic ring is substituted with an ion-exchange group, and wherein at least one of the hydrogens is substituted with a group comprising a linking group and an ion-exchange group, as shown in general formula (5). The "-Ph" in the repeating units shown below represents a phenyl group.

[Chemical Formula 4]

A-1

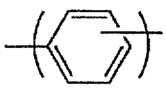

A-2

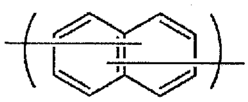

A-3

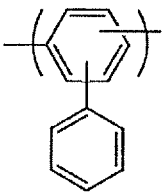

A-4

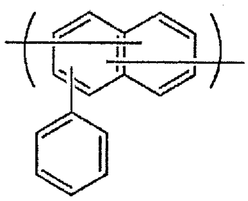

A-5

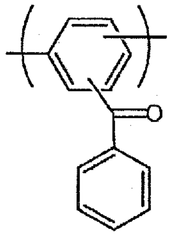

A-6

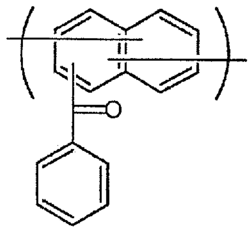

A-7

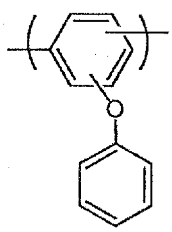

A8

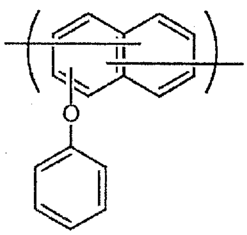

A9

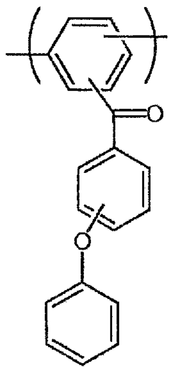

A-10

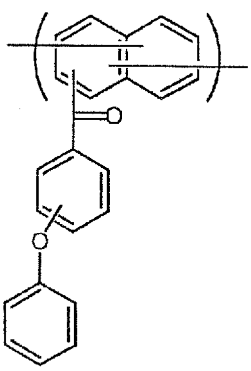

A-11

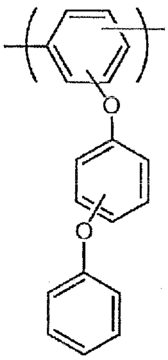

A-12

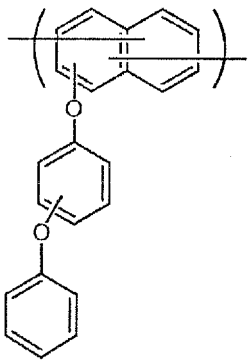

A-13

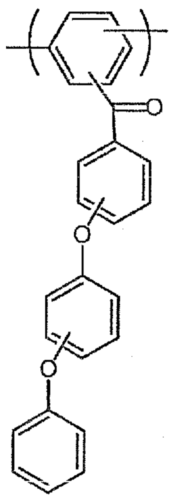

A-14

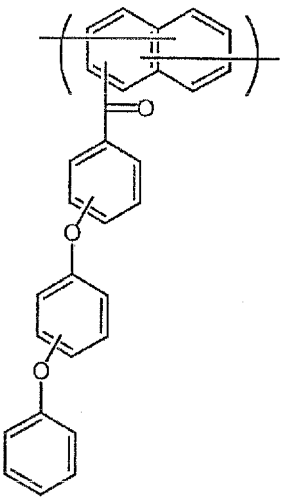

[Chemical Formula 5]

B-1
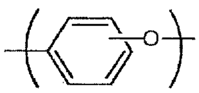

B-2
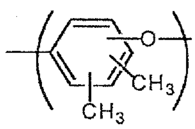

B-3
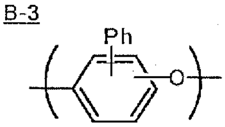

B-4
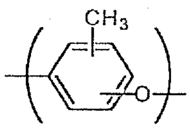

B-5
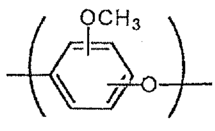

B-6
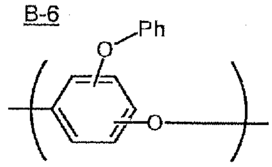

B-7
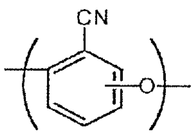

B-8
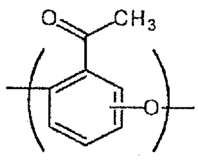

B-9
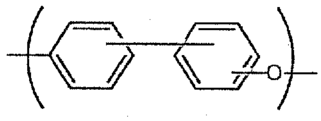

B-10
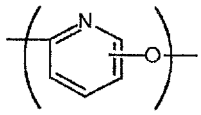

B-11
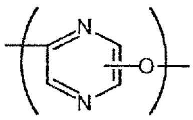

B-12
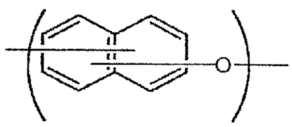

B-13
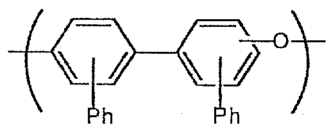

B-14
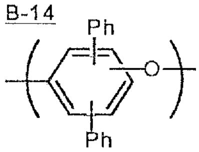

[Chemical Formula 6]

C-1

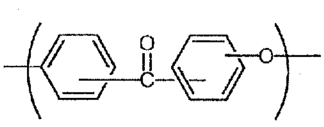

C-2

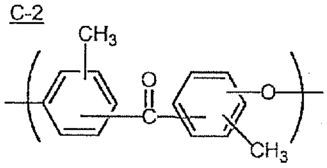

C-3

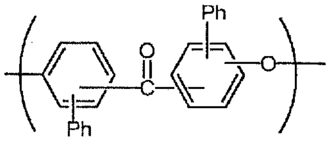

C-4

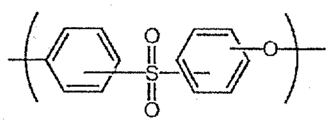

C-5

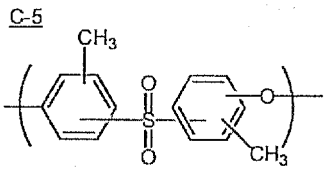

C-6

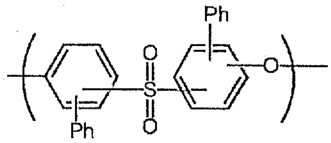

C-7

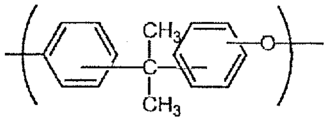

C-8

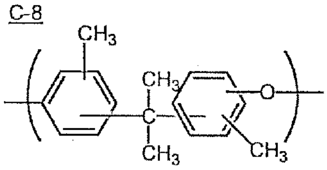

C-9

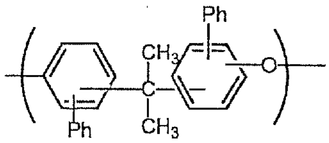

C-10

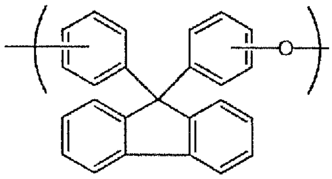

C-11

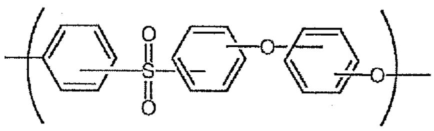

C-12

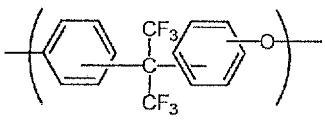

[Chemical Formula 7]

D-1

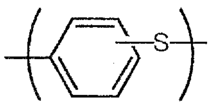

D-2

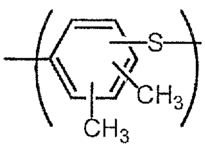

D-3

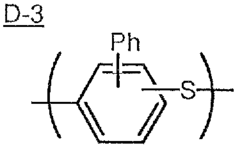

D-4

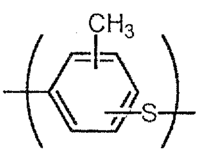

D-5

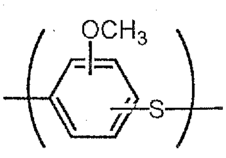

D-6

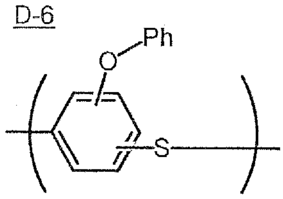

Of these examples, the repeating unit (a) with an ion-exchange group is preferably one with an ion-exchange group in a repeating unit selected from among (A-1), (A-2), (A-5), (A-9), (A-13), (B-1), (B-12), (C-1), (C-4), (C-7), (C-10)

and (C-11), more preferably one with an ion-exchange group in a repeating unit selected from among (A-1), (A-2), (A-5), (A-9), (C-1) and (C-4), and even more preferably one with an ion-exchange group in a repeating unit selected from among (A-1), (A-2) and (A-9).

The random copolymers and block copolymers having a repeating unit (a) with an ion-exchange group and a repeating unit (b) with no ion-exchange group can be produced by known processes. A block copolymer with block a and block b can be synthesized by the following process, for example.

The method of controlling the copolymerization pattern of the polymer may be (i) a method in which the precursor polymer for block a and the precursor polymer for block b are prepared first, and the two are linked, (ii) a method in which there is first prepared a block copolymer comprising blocks composed of a repeating unit to which ion-exchange groups can be introduced and blocks composed of a repeating unit to which ion-exchange groups cannot be introduced, and ion-exchange groups are then introduced into the former blocks, and (iii) a method in which the precursor polymer for block b and a monomer with an ion-exchange group are combined, and the monomer with ion-exchange groups is polymerized while linking this polymer with the precursor polymer for block b.

The block copolymer may be a block copolymer with one block a and block b, or it may be a multiblock copolymer having a plurality of either or both blocks.

The block copolymer in the polymer layer is a block copolymer comprising a segment with an acidic and/or basic ion-exchange group (block a) and a segment with no ion-exchange group (block b). This polymer may be a block copolymer with one of each segment, or it may be a block copolymer having 2 or more of either segment, or a multiblock copolymer having 2 or more of both segments.

Also, when two different precursor polymers for block a and block b are linked to form both blocks as in (i) above, a compound having a group that reacts with the ends of the two different precursor polymers may be used as a linking agent.

When the block copolymer is a multiblock, the polymerization degree (ma) of block a and the polymerization degree (mb) of block b may be determined as the weighted average of the blocks. A block copolymer satisfying the relationship ma > mb can be produced by using one for (i) above wherein the polymerization degree of the precursor polymer for block a is higher than the polymerization degree of the precursor polymer for block b. In (iii) above, production may be carried out using a precursor polymer for block b with a relatively low polymerization degree, to increase the number of equivalents of monomer with an ion-exchange group with respect to the precursor polymer for block b.

Block copolymers wherein block a is represented by the following general formula (6) and block b is represented by the following general formula (7) are more preferred for the polymer layer from the viewpoint of exhibiting higher water permeability.

[Chemical Formula 8]

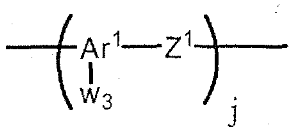

(6)

[Chemical Formula 9]

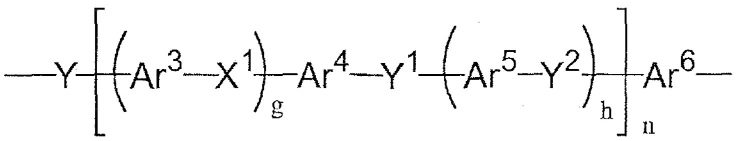

(7)

In general formula (6), j represents an integer of 5 or greater, $W_3$ represents an ion-exchange group, and the other symbols are the same as in general formula (1). When more than one $Ar^1$ and $Z^1$ are present, they may be the

same or different.

In general formula (7), $Ar^6$ represents a divalent aromatic group. The hydrogens in the divalent aromatic group may be optionally replaced with optionally substituted C1-20 alkyl, optionally substituted C1-20 alkoxy, optionally substituted C6-20 aryl, optionally substituted C6-20 aryloxy or optionally substituted C2-20 acyl. Also, each Y in general formula (7) independently represents a divalent group or direct bond. The letter n represents an integer of 1 or greater, preferably 3 or greater and most preferably 5 or greater. The other symbols are the same as in general formula (2) above. $Y^1$ and $Y^2$ are preferably oxygen atoms or sulfonyl groups, and Y is preferably a direct bond or an oxygen atom.

In general formulas (6) and (7), j and n are preferably no greater than 1000 and more preferably no greater than 500 from the viewpoint of facilitating production of the block copolymer.

The weight ratio of block a and block b in the block copolymer will depend on the type of each block, but preferably block a is used at 20-75 wt% and more preferably 30-75 wt% with respect to the total weight of the block copolymer in the polymer layer.

The following (F-1)-(F-22) may be mentioned as specific preferred examples for block b represented by general formula (7) above. The letter n in the following represents an integer of 1 or greater.

[Chemical Formula 10]

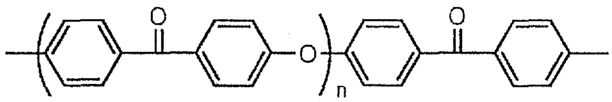

(F-1)

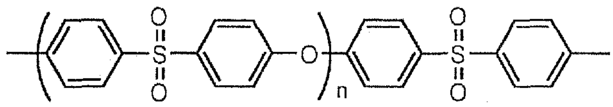

(F-2)

[Chemical Formula 11]

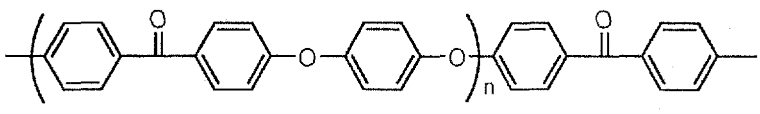

(F-3)

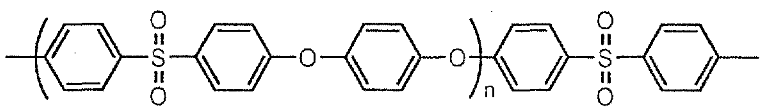

(F-4)

[Chemical Formula 12]

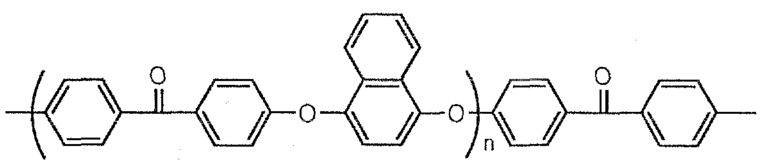

(F-5)

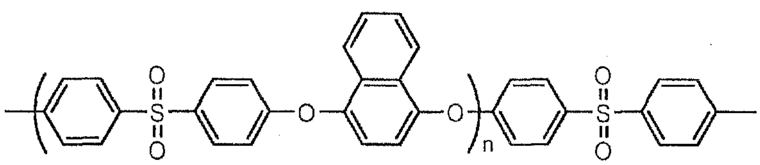

(F-6)

[Chemical Formula 13]

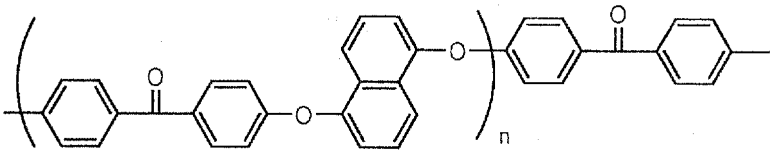
(F-7)

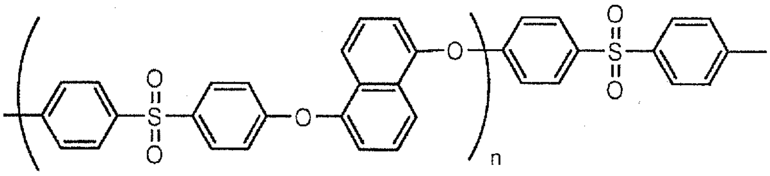
(F-8)

[Chemical Formula 14]

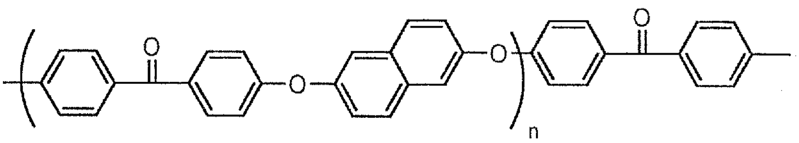
(F-9)

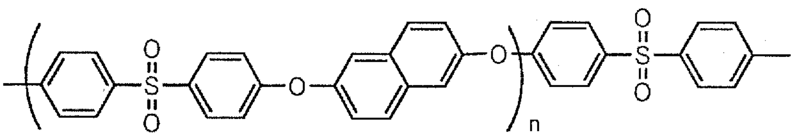
(F-10)

[Chemical Formula 15]

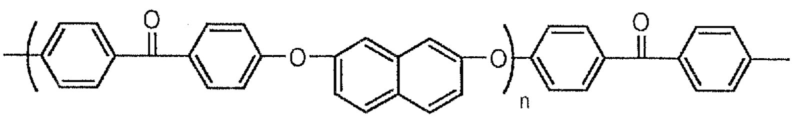
(F-11)

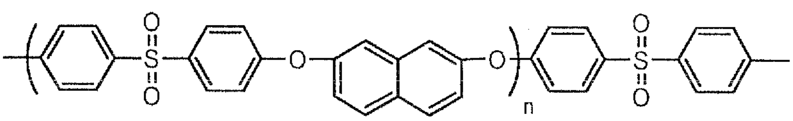
(F-12)

[Chemical Formula 16]

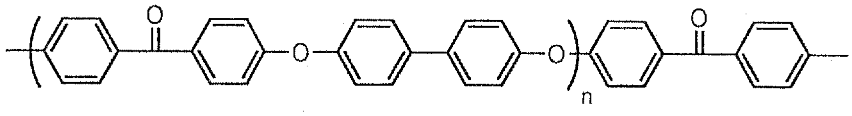 (F-13)

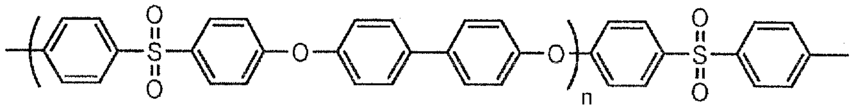 (F-14)

[Chemical Formula 17]

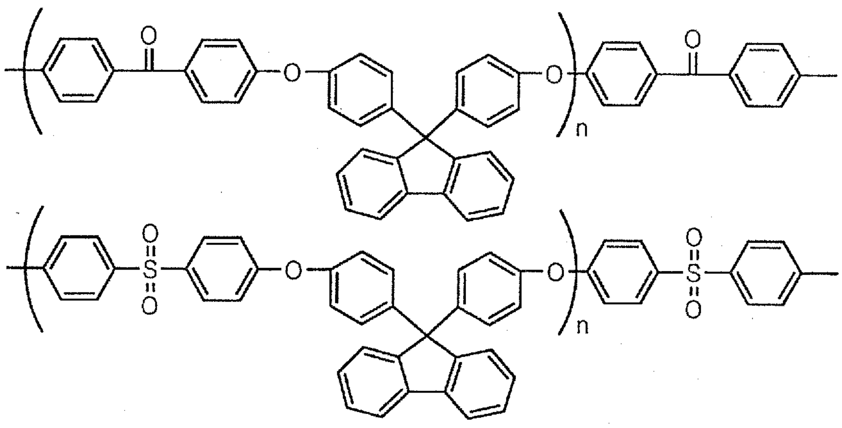 (F-15)

(F-16)

[Chemical Formula 18]

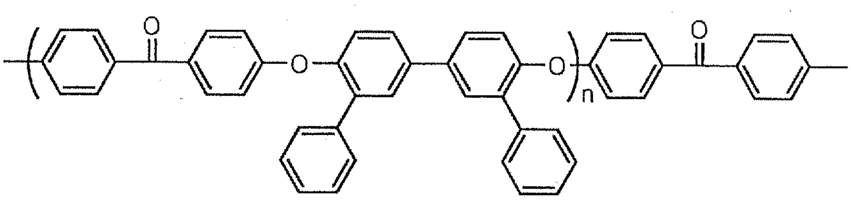 (F-17)

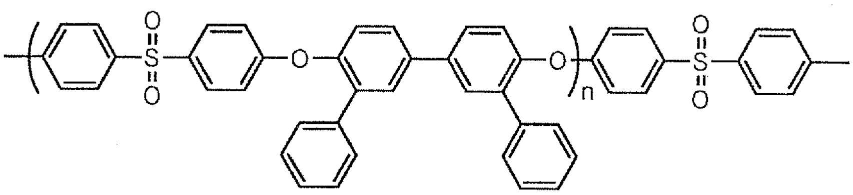 (F-18)

[Chemical Formula 19]

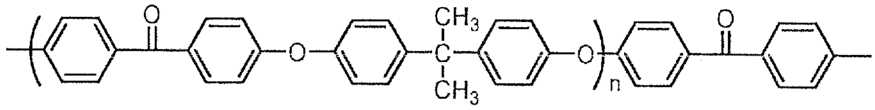

(F-19)

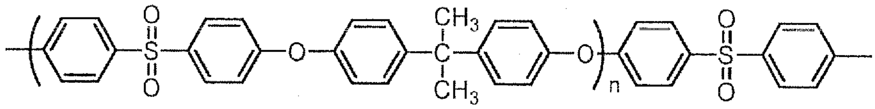

(F-20)

[Chemical Formula 20]

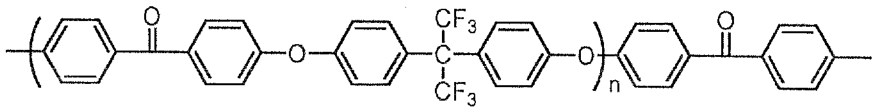

(F-21)

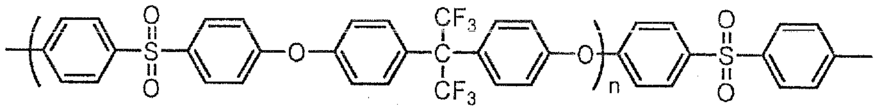

(F-22)

Blocks having ether bond-forming oxygen atoms in at least one of the ends of each of (F-1)-(F-22) above may also be mentioned as specific examples for block b.

As mentioned above, the block copolymer in the polymer layer is preferably a copolymer comprising block a that can exhibit higher water permeability and block b that can exhibit higher water resistance, and for easier production it is preferably one of H-1-H-60 in Tables 1-5 below. The numbers listed in the columns for block a and block b in Tables 1-5 are the numbers of repeating units or blocks for each. The block copolymers H-1-H-60 each have a repeating unit with an ion-exchange group or any group represented by general formula (5) in the repeating unit, listed in the block a columns in Tables 1-5, and a repeating unit listed in the block b columns.

[Table 1]

| Block copolymer | Block a | Block b |
|---|---|---|
| H-1 | A-1 | F-1 |
| H-2 | A-1 | F-2 |
| H-3 | A-1 | F-3 |
| H-4 | A-1 | F-4 |
| H-5 | A-1 | F-9 |
| H-6 | A-1 | F-10 |
| H-7 | A-1 | F-13 |
| H-8 | A-1 | F-14 |
| H-9 | A-1 | F-19 |
| H-10 | A-1 | F-20 |
| H-11 | A-1 | F-21 |
| H-12 | A-1 | F-22 |

[Table 2]

| Block copolymer | Block a | Block b |
|---|---|---|
| H-13 | A-5 | F-1 |
| H-14 | A-5 | F-2 |
| H-15 | A-5 | F-3 |
| H-16 | A-5 | F-4 |
| H-17 | A-5 | F-9 |
| H-18 | A-5 | F-10 |
| H-19 | A-5 | F-13 |
| H-20 | A-5 | F-14 |
| H-21 | A-5 | F-19 |
| H-22 | A-5 | F-20 |
| H-23 | A-5 | F-21 |
| H-24 | A-5 | F-22 |

[Table 3]

| Block copolymer | Block a | Block b |
|---|---|---|
| H-25 | A-9 | F-1 |
| H-26 | A-9 | F-2 |
| H-27 | A-9 | F-3 |
| H-28 | A-9 | F-4 |
| H-29 | A-9 | F-9 |
| H-30 | A-9 | F-10 |
| H-31 | A-9 | F-13 |
| H-32 | A-9 | F-14 |
| H-33 | A-9 | F-19 |
| H-34 | A-9 | F-20 |
| H-35 | A-9 | F-21 |
| H-36 | A-9 | F-22 |

[Table 4]

| Block copolymer | Block a | Block b |
|---|---|---|
| H-37 | A-13 | F-1 |
| H-38 | A-13 | F-2 |
| H-39 | A-13 | F-3 |
| H-40 | A-13 | F-4 |
| H-41 | A-13 | F-9 |

(continued)

| Block copolymer | Block a | Block b |
|---|---|---|
| H-42 | A-13 | F-10 |
| H-43 | A-13 | F-13 |
| H-44 | A-13 | F-14 |
| H-45 | A-13 | F-19 |
| H-46 | A-13 | F-20 |
| H-47 | A-13 | F-21 |
| H-48 | A-13 | F-22 |

[Table 5]

| Block copolymer | Block a | Block b |
|---|---|---|
| H-49 | C-11 | F-1 |
| H-50 | C-11 | F-2 |
| H-51 | C-11 | F-3 |
| H-52 | C-11 | F-4 |
| H-53 | C-11 | F-9 |
| H-54 | C-11 | F-10 |
| H-55 | C-11 | F-13 |
| H-56 | C-11 | F-14 |
| H-57 | C-11 | F-19 |
| H-58 | C-11 | F-20 |
| H-59 | C-11 | F-21 |
| H-60 | C-11 | F-22 |

Each of the above-mentioned block copolymers may be produced, for example, by the block copolymer production process described in Japanese Unexamined Patent Publication No. 2001-250567, Japanese Unexamined Patent Publication No. 2003-31232, Japanese Unexamined Patent Publication No. 2004-359925, Japanese Unexamined Patent Publication No. 2005-232439 or Japanese Unexamined Patent Publication No. 2003-113136.

A random copolymer, on the other hand, is a polymer in which the monomer with an ion-exchange group and the monomer with no ion-exchange group are arranged in a statistically random fashion. Such a random copolymer can be produced by charging the monomer with an ion-exchange group and the monomer with no ion-exchange group together before the start of polymerization, to polymerize them with each other.

For this embodiment, the block copolymer and random copolymer may be selected so that their ends link together, so that reacting them can produce a polymer having a molecular chain with a block copolymerization pattern and a molecular chain with a random copolymerization pattern. This will allow appropriate modification of the block character, i.e. the block character $\alpha$ in general formula (3) above. The block character $\alpha$ can also be appropriately modified by separately producing a polymer having a molecular chain with a block copolymerization pattern and a polymer having a molecular chain with a random copolymerization pattern, and blending them together.

As mentioned above, multiple layers with different block characters may also be produced by producing a block copolymer (wherein $\alpha$ approaches 0), a random copolymer (wherein $\alpha$ approaches 1) or if necessary a polymer with any $\alpha$ value. This will allow production of anode catalyst layers 20-22 according to the first and second embodiments.

The proportion of the block copolymer and random copolymer in each polymer layer of the anode catalyst layer can be confirmed by the following method, for example.

(1) A scanning electron microscope is used to observe a cross-section of the MEA, and the number of polymer layers composing the anode catalyst layer and the thickness of each polymer layer are measured.
(2) A SAICAS (Surface And Interfacial Cutting Analysis System, commercially available from Daipla Wintes Co., Ltd., for example) is used to cut the anode catalyst layer at each polymer layer interface based on the thickness measurement results for each polymerization layer obtained in (1), and each polymerization layer is separated.
(3) The polymer component is removed from each separated polymer layer by a method such as solvent extraction.
(4) A film is formed from the obtained polymer component by a method such as solvent casting, and the microphase separation structure of the obtained film is observed using a transmission electron microscope (TEM) or the like.
(5) As a result of the observation, the polymer layers composed of polymer components observed to have a microphase separation structure are the block copolymer-containing polymer layers, and the polymer layers composed of polymer components observed to have no microphase separation structure are the random copolymer-containing polymer layers. Polymer layers composed of polymer components in which a microphase separation structure is more clearly observed have higher block character, and have a higher proportion of block copolymers with respect to the total polymers.

The "microphase separation structure" referred to here is a structure composed of a mixture of a microphase (microdomain) with a high density of block (A) with ion-exchange groups and a microphase (microdomain) with a high density of block (B) with essentially no ion-exchange groups, when the film is observed under a TEM, and the domain width of each microdomain structure, i.e. the identity period, is between several nm and several 100 nm.

The polymer electrolyte membrane 10 and cathode catalyst layer 30 also contain a polymer. Examples for this polymer include the block copolymers and random copolymers contained in the polymer layers mentioned above, as well as the following polymers (P-1)-(P-4).

Specifically, there may be mentioned (P-1) polymers having sulfonic acid and/or phosphonic acid groups introduced into a polymer whose main chain is composed of an aliphatic hydrocarbon, (P-2) polymers having sulfonic acid and/or phosphonic acid groups introduced into a polymer wherein some or all of the hydrogens of the aliphatic hydrocarbon are replaced with fluorine atoms, (P-3) polymers having sulfonic acid and/or phosphonic acid groups introduced into the main chain of a polymer such as polysiloxane or polyphosphazene that contains essentially no carbon atoms, and (P-4) polymers containing basic nitrogen atoms on the main chain or side chains and having acidic compounds such as sulfuric acid or phosphoric acid introduced by ionic bonding.

As examples of polymers of (P-1) there may be mentioned resins obtained by using a sulfonating agent to introduce sulfonic acid groups into ethylene-vinylsulfonic acid copolymer, acrylonitrile-styrenesulfonic acid copolymer, polystyrene or poly(α-methylstyrene). A sulfonating agent is a compound that replaces hydrogens in an organic compound with sulfonic acid groups. Examples of preferred sulfonating agents include fuming sulfuric acid, sulfur trioxide and chlorosulfonic acid.

As polymers of (P-2) above there may be mentioned Nafion$^R$ by Dupont Corp., Aciplex$^R$ by Asahi Kasei Corp., and Flemion$^R$ by Asahi Glass Co., Ltd. There may also be mentioned sulfonic acid-type polystyrene-graft-ethylene-tetrafluoroethylene copolymer (ETFE) composed of a main chain produced by copolymerization between a fluorine-based vinyl carbide monomer and a hydrocarbon-based vinyl monomer and hydrocarbon-based side chains with sulfonic acid groups, which is described in Japanese Unexamined Patent Publication HEI No. 9-102322, and sulfonic acid-type poly(trifluorostyrene)-graft-ETFE obtained by graft polymerization of α,β,β-trifluorostyrene onto a copolymer produced by copolymerization between a fluorine-based vinyl carbide monomer and a hydrocarbon-based vinyl monomer and introduction of sulfonic acid groups to produce an ion exchanger, which is described in USP 4,012,303 and USP 4,605,685.

As examples of polymers of (P-3) above there may be mentioned those obtained by introducing sulfonic acid groups into polyphosphazene.

As examples of polymers of (P-4) above there may be mentioned phosphoric acid-containing polybenzimidazoles, such as those mentioned in Japanese Patent Public Inspection HEI No. 11-503262.

The polymer electrolyte composing the polymer electrolyte membrane 10 is preferably a hydrocarbon-based polymer electrolyte from the viewpoint of obtaining a membrane-electrode assembly with even more excellent electric power generation performance. The term "hydrocarbon-based polymer electrolyte" used here means a polymer electrolyte in which the elemental weight ratio of fluorine with respect to the total polymer electrolytes is no greater than 15 wt%.

In order to obtain a solid polymer fuel cell suitable for practical use, the polymer electrolyte membrane 10 preferably has excellent mechanical strength or heat resistance, and as polymer electrolytes to form the polymer electrolyte membrane 10 there are preferred, among the examples mentioned above, aromatic-based polymer electrolytes having an aromatic ring on the main chain. Preferred among these are polymer electrolytes having both aromatic segments with ion-exchange groups and aromatic segments with essentially no ion-exchange groups, wherein the copolymerization pattern is block copolymerization or graft copolymerization. Specific examples include block copolymers comprising a sulfonic acid group-containing segment (hydrophilic segment) and an essentially ion-exchange group-free segment (hydrophobic segment), as described in Japanese Unexamined Patent Publication No. 2001-250567.

The cathode catalyst layer 30 may contain, in addition to the polymers mentioned above, also the same catalyst substance as the anode catalyst layer, or a conducting material having the catalyst substance supported on the surface.

The method for producing the solid polymer fuel cell 200 according to the second embodiment will now be explained.

The polymer electrolyte membrane 10 can be produced by molding the polymer for the polymer layer into a film by a known method such as solution casting, as explained above.

During production of the polymer electrolyte membrane 10, other components may be included in addition to the polymer, according to the desired properties and in ranges that do not notably reduce the proton conductivity. As such other components there may be mentioned additives such as plasticizers, stabilizers, release agents and humectants that are ordinarily used in polymers. A stabilizer that can impart radical resistance is most preferably used from the viewpoint of minimizing deterioration of the polymer electrolyte membrane of the solid polymer fuel cell.

For improved mechanical strength of the polymer electrolyte membrane 10, a composite membrane obtained by compositing the polymer electrolyte with a prescribed support may be used. The support may be a base material with a fibril form or porous membrane form.

An anode catalyst layer 22 is formed on one main side of the polymer electrolyte membrane 10 obtained in this manner. A method widely employed for formation of anode catalyst layers uses catalyst ink prepared as a solution or dispersion by mixing the catalyst substance and polymer with a solvent. As solvents there are preferred solvents in which the polymer electrolyte membrane 10 does not easily dissolve, and there may be used water, alcohols, and mixtures of water and alcohols.

In the second embodiment, the anode catalyst layer 22 comprises 4 polymer layers (22a, 22b, 22c, 22d). The layers may be formed by preparing catalyst inks 1-4. For preparation of the catalyst inks 1-4, the polymers contained in each of the catalyst inks may be selected for their block character. This will allow the block character of the polymer in catalyst ink 1 to be the lowest and the block character of the polymer in catalyst ink 4 to be the highest. Thus, the weight ratio of block copolymer with respect to the total polymer in catalyst ink 1 will be lowest and the weight ratio in catalyst ink 4 will be highest. The anode catalyst layer 22 is preferably produced with each layer having the same proton conductivity, since this will allow the ion conduction resistance at the interlayer interface to be lowered and promote smoother ion conduction in the catalyst layer.

The catalyst ink may be prepared by mixing the catalyst substance, polymer and solvent, and additive components that are added as necessary, by known means. The mixing method used may employ an ultrasonic dispersion device, homogenizer, ball mill, planetary ball mill, sand mill or the like.

Each layer of the anode catalyst layer 22 can be formed by directly coating the prepared catalyst ink onto the polymer electrolyte membrane 10 to form a catalyst layer (hereinafter referred to as "solution casting"). This can create firm adhesion between the polymer electrolyte membrane and the polymer layer bonded thereto.

As methods for coating the catalyst ink by solution casting there may be mentioned known methods such as spraying, roller coating, gravure coating, knife coating, blade coating and screen printing. Spraying is preferred among these since it allows formation of catalyst layers with excellent in-plane uniformity. "Spraying" means spraying a fluid material by the jet force of a compressed gas to produce a fine particulate form of the material which adheres onto a board or the like. Specifically, there may be mentioned the method described in Japanese Unexamined Patent Publication No. 2004-89976. Spraying has the advantage of facilitating direct coating of the catalyst ink on the polymer electrolyte membrane 10, and it is particularly preferred as the method for forming the anode catalyst layer 22 since it allows easier control of the desired number of polymer layers and the polymer layer thicknesses.

The method for forming the anode catalyst layer 22 will now be explained in greater detail. First, the catalyst ink 1 for coating of the polymer layer 22a is coated onto the polymer electrolyte membrane 10. Heat treatment may then be performed to form the polymer layer 22a on the polymer electrolyte membrane 10. Next, the catalyst ink 2 for formation of the polymer layer 22b is coated in the same manner onto the side of the polymer layer 22a opposite the contact surface with the polymer electrolyte membrane 10. Heat treatment may then be performed to form the polymer layer 22b on the polymer electrolyte membrane 10. The catalyst inks 3 and 4 are each used in the same manner to form a polymer layer 22c on the polymer layer 22b and a polymer layer 22d on the polymer layer 22c. It is thus possible to form an anode catalyst layer 22 comprising four polymer layers on the polymer electrolyte membrane 10.

In the production method described above, heat treatment was performed after coating the catalyst ink in order to remove the solvent and volatile substances in the catalyst ink, but ventilation treatment or a combination of the foregoing may be used instead. The means for removing the solvent is preferably heat treatment. The heat treatment conditions may be optimized as appropriate for the type of volatile substances in the catalyst ink to be applied and the type of polymer electrolyte membrane.

The anode catalyst layer 22 can be formed by coating the catalyst inks 1-4 each on separate supports and removing the solvent to form a precursor for each polymerization layer, and then thermocompression bonding each precursor formed on the support onto the polymer electrolyte membrane 10 (hereinafter referred to as "support method").

In this support method, the same number of supports as the number of polymer layers of the anode catalyst

layer 22, i.e. 4 supports, are prepared, and each support is coated with a catalyst ink comprising a polymer with a different block character to form precursors for polymer layers 22a-22d. The precursor for the polymer layer 22a is then thermocompression bonded with the polymer electrolyte membrane 10 and the support is removed. The thermocompression bonding is preferably carried out under conditions of 100°C-200°C, 5-10 MPa, 0.25-1.0 hours. The support used may be a PTFE (polytetrafluoroethylene) sheet. Next, the precursors for polymer layers 22b, 22c and 22d may be contact bonded and their supports removed in the same manner in that order, to form an anode catalyst layer 22 comprising 4 layers on the polymer electrolyte membrane 10.

After the precursors for the polymer layers 22a-22d have been laminated in that order on the support in this support method, they may be thermocompression bonded together on the polymer electrolyte membrane 10. In this support method, if the support on which the precursor for the polymer layer 22d is to be formed is the base material used to form the anode side gas diffusion layer 40, it will not be necessary to remove the support from the polymer layer 22d, and the polymer layer 22d and anode side gas diffusion layer 40 can thus be formed simultaneously.

Thus, a support method or solution casting method may be used to form the anode catalyst layer 22 on the polymer electrolyte membrane 10. However, a solution casting method is preferred because damage to the polymer layer can occur during removal of the support in a support method, while the bonding property of the layer to be contacted with the polymer electrolyte membrane 10 (polymer layer 22a) for the polymer electrolyte membrane 10 is superior in a solution casting method.

The anode catalyst layer 20 according to the first embodiment may be formed, for example, by using two different types of catalyst inks selected from among the 4 types of catalyst inks prepared for formation of the polymer layers 22a-22d, to form the polymer layer 20a and polymer layer 20b. The anode catalyst layer 20 can be easily formed because the anode catalyst layer 20 is formed from 2 layers, the polymer layer 20a and polymer layer 20b.

The cathode catalyst layer 30 is formed on the side of the polymer electrolyte membrane 10 opposite the side on which the anode catalyst layer 22 has been laminated. The cathode catalyst layer 30 may be an ordinary catalyst layer that has been commonly used in the field, i.e. a catalyst layer with a single-layer structure made of a simple composition. The cathode catalyst layer may be formed using the catalyst ink used to form the anode catalyst layer 22 as explained above, or it may be an ordinarily used catalyst ink. The order of formation of the anode catalyst layer 22 and cathode catalyst layer 30 is not particularly restricted.

The anode side gas diffusion layer 40 and cathode side gas diffusion layer 50 may be formed by known methods using known materials. Commercial products are also available. Specifically, there may be used layers formed of a porous material comprising a conducting material such as carbon. Such layers may be laminated sandwiching the membrane-electrode assembly 2 by a known method to produce the membrane-electrode-gas diffusion layer assembly 6.

The anode side separator 60 and cathode side separator 70 may also be formed by known methods using known materials. Commercial products for these are also available. The separators may be laminated sandwiching the membrane-electrode-gas diffusion layer assembly 6 by a known method to produce the solid polymer fuel cell 200.

The embodiments described above are only preferred embodiments of the invention, and the invention is in no way limited thereto.

Examples

The present invention will now be explained in greater detail based on examples and comparative examples, with the understanding that these examples are in no way limitative on the invention.

(Example 1)

<Preparation of polymer electrolyte P1>

In a flask equipped with an azeotropic distillation device there were placed 600 mL of DMSO (dimethyl sulfoxide), 200 mL of toluene, 26.5 g (106.3 mmol) of sodium 2,5-dichlorobenzenesulfonate, 10.0 g of terminal chloro-type polyethersulfone (trade name: SUMIKA EXCEL PES5200P by Sumitomo Chemical Co., Ltd., number-average molecular weight = $5.4 \times 10^4$, weight-average molecular weight = $1.2 \times 10^5$) and 43.8 g (280.2 mmol) of 2,2'-bipyridyl under an argon atmosphere, and the mixture was stirred. The oil bath temperature was then raised to 150°C for azeotropic dehydration of the moisture in the system while distilling off the toluene, and after cooling to 60°C, 73.4 g (266.9 mmol) of bis(1,5-cyclooctadiene)nickel(0) was added, the oil bath temperature was raised to 80°C and the mixture was stirred for 5 hours at the same temperature to obtain a reaction mixture.

After being allowed to cool, the reaction mixture was poured into a large amount of 6 mol/L hydrochloric acid to precipitate a polymer, and the polymer was filtered. Rinsing/filtration of the filtered polymer with 6 mol/L hydrochloric acid was then repeated several times, after which the polymer was rinsed until the filtrate reached neutral, and the mixture was agitated for 2 hours with hot water at above 90°C for hot water rinsing, and filtered. This was dried under

reduced pressure to obtain 16.3 g of a polyarylene-based block copolymer (polymer electrolyte P1). The number-average molecular weight of the polymer electrolyte P1 was 100,000, and the weight-average molecular weight was 260,000. The number-average molecular weight and weight-average molecular weight throughout the present specification are the values measured by gel permeation chromatography (GPC), using a standard polystyrene calibration curve. The GPC analysis can be carried out under the following conditions.

GPC measuring apparatus: HLC-8220 by TOSOH
Column: Two AT-80 M columns by Shodex connected in series.
Column temperature: 40°C
Mobile phase solvent: Dimethylacetamide (LiBr added to 10 mmol/$dm^3$)
Solvent flow rate: 0.5 mL/min

A film was formed from the polymer electrolyte P1 by solution casting, and a halogen moisture content meter (trade name: HR-73 by Mettler-Toledo Inc.) set to a heating temperature of 105°C was used to determine the dry weight of the film. The film was then immersed in 5 mL of aqueous 0.1 mol/L sodium hydroxide, and then 50 mL of ion-exchanged water was added and the mixture was allowed to stand for 2 hours. The solution in which the film had been immersed was then subjected to neutralization titration with 0.1 mol/L hydrochloric acid to determine the neutralization point. The ion-exchange capacity (IEC, units: meq/g) of the film was calculated from the dry weight of the film and the amount of hydrochloric acid required for the neutralization.

The ion-exchange capacity of the film obtained from the polymer electrolyte P1 was 2.3 meq/g. The polymerization degree of the polymer electrolyte P1 determined from the number-average molecular weight and weight-average molecular weight was 195.

<Synthesis of stabilizer polymer>

The random copolymer represented by formula (8) below was formulated using diphenylsulfone as the solvent and reacting 4,4'-dihydroxydiphenylsulfone, 4,4'-dihydroxybiphenyl and 4,4'-dichlorodiphenylsulfone in a molar ratio of 4:6:10 in the presence of potassium carbonate. In formula (8), "0.70" and "0.30" shown for each repeating unit represent the molar ratios of each repeating unit.

[Chemical Formula 21]

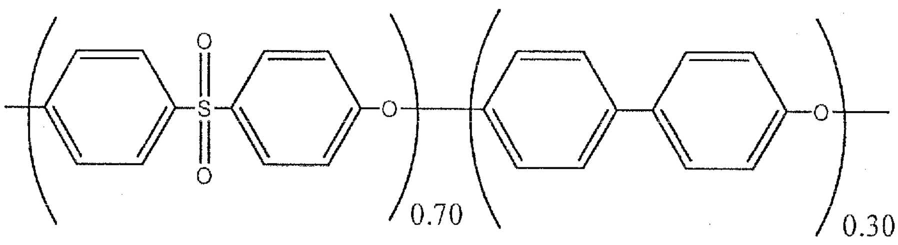

(8)

Next, following the method described in Japanese Unexamined Patent Publication No. 2003-282096, the random copolymer represented by general formula (8) was subjected to bromination and phosphonic acid esterification treatment, and then further hydrolyzed to obtain a stabilizer polymer having a structure with approximately 0.2 bromo groups and approximately 1.7 phosphonic acid groups (groups represented by $-P(O)(OH)_2$) for each unit comprising the oxybiphenylene structure in general formula (8).

<Fabrication of polymer electrolyte membrane 1>

A polymer electrolyte solution was formulated by dissolving a mixture of the polymer electrolyte P1 obtained as described above and an additive (stabilizer polymer) (polymer electrolyte P1:additive = 9:1 (weight ratio)) in DMSO to a concentration of about 15 wt%. The polymer electrolyte solution was then dropped onto a glass plate. A wire coater was used to evenly spread the polymer electrolyte solution onto the glass plate. The clearance of the wire coater was varied during this time to control the coating thickness. After coating the polymer electrolyte solution, it was dried at 80°C under ordinary pressure. The obtained membrane was immersed in 1 mol/L hydrochloric acid and then rinsed with ion-exchanged water, and further dried at ordinary temperature to obtain polymer electrolyte membrane 1 with a thickness of 30 μm.

<Preparation of catalyst ink 1>

To 6 mL of a commercially available 5 wt% Nafion^R solution (product of Aldrich Co., trade name: Nafion perfluorinated ion-exchange resin, 5 wt% soln in lower aliphatic alcohols/$H_2O$ mix, EW = 1100, IEC = 0.91 meq/g, solvent: water/alcohol mixture) there was added 0.84 g of platinum-supporting carbon (platinum loading weight: 50 wt%), and then 13.20 mL of ethanol was added. The obtained mixture was subjected to ultrasonic treatment for 1 hour and then stirred for 5 hours with a stirrer to obtain catalyst ink 1.

The abbreviation "EW" above represents the Equivalent Weight of exchanged groups with proton conductivity, and it is represented as the dry weight of ion-exchange membrane to 1 equivalent of ion-exchange groups ("g/ew"). An ion exchange resin with a smaller EW has relatively higher hydrophilicity.

<Preparation of catalyst ink 2>

To 6.30 g of a commercially available 5 wt% Nafion^R solution (product of Aldrich Co., trade name: Nafion perfluorinated ion-exchange resin, 5 wt% soln in lower aliphatic alcohols/$H_2O$ mix, EW: 1100, ion-exchange capacity: 0.91 meq/g, solvent: water/alcohol mixture) there was added 1.00 g of platinum-supporting carbon (platinum loading weight: 50 wt%), and then a mixture of 6.36 g of water and 43.66 g of ethanol was added. The obtained mixture was subjected to ultrasonic treatment for 1 hour and then stirred for 5 hours with a stirrer to obtain catalyst ink 2.

A film (layer) was formed from catalyst ink 2 and the ion-exchange capacity (IEC, units: meq/g) was calculated, in the same manner as for formation of the film from the polymer electrolyte P1 and calculation of the ion-exchange capacity. As a result, the ion-exchange capacity of the film (layer) obtained from catalyst ink 2 was 0.22 meq/g. Based on its production process, Nation can be considered to be a random copolymer. The film (layer) therefore contained a random copolymer.

<Preparation of catalyst ink 3>

A 1.0 g portion of polymer electrolyte membrane 1 was dissolved in 99 g of N-methylpyrrolidone (NMP) to produce 100 g of solution. The solution was slowly dropped into 900 g of water while stirring, to obtain a mixture of the polymer electrolyte, NMP and water. The mixture was enclosed with a dialysis membrane (trade name: UC36-32-100 by Sanko Junyaku Co., Ltd., molecular cutoff: 14,000) and washed with running water for 72 hours. The mixture was then removed from the dialysis membrane and concentrated to 50 g using an evaporator under conditions with a temperature of 60°C and a pressure of 50 mTorr to obtain polymer electrolyte emulsion 1. The mean particle size of the polymer electrolyte emulsion 1 was measured with a fiber-optics particle size analyzer (trade name: FPAR-1000 by Otsuka Electronics Co., Ltd.) to be 101 μm. The solvent composition of the obtained polymer electrolyte emulsion 1 was analyzed and found to have a water content of ≥99.9 wt%.

A 50 g portion of the polymer electrolyte emulsion 1 was dried with a drier at 80°C to remove the solvent, thus obtaining 0.825 g of polymer electrolyte P2.

Catalyst ink 3 was produced in the same manner as catalyst ink 2, except that 0.20 g of polymer electrolyte P2 was used instead of the 6.30 g of the 5 wt% Nafion solution.

A film (layer) was formed from catalyst ink 3 and the ion-exchange capacity (IEC, units: meq/g) was calculated, in the same manner as for formation of the film (layer) from the polymer electrolyte P1 and calculation of its ion-exchange capacity. As a result, the ion-exchange capacity of the film (layer) obtained from catalyst ink 3 was 0.38 meq/g. The film (layer) is obtained by mixing polymer electrolyte P2 with a stabilizer polymer in a ratio of 9:1 (weight ratio), and it comprises a block copolymer and a random copolymer. The weight ratio of the block copolymer and random copolymer (block copolymer:random copolymer) in this film was 9:1.

<Fabrication of MEA>

An MEA was fabricated next in the following manner. First, catalyst ink 1 was coated onto one main side of the polymer electrolyte membrane 1 fabricated in the manner described above (the side on which the catalyst layer was to be formed), by spraying in a 5.2 cm square region at the center of the main side. The spraying was carried out using a large pulse spray catalyst-forming apparatus (Spray Gun Model NCG-FC (CT) by Nordson, KK.) according to the method described in Japanese Unexamined Patent Publication No. 2004-089976.

As the coating conditions for spraying, the distance was 6 cm from the discharge slit to the film, and the stage temperature was set to 75°C. The catalyst ink 1 was recoated onto the coated catalyst ink 1 under the same coating

conditions (total coats: 8), and it was allowed to stand on the stage to remove the solvent, to form a cathode catalyst layer.

The amount of platinum in the cathode catalyst layer was calculated from the composition of the catalyst ink 1, the weight of the coated catalyst ink 1 and the size of the cathode catalyst layer. As a result, the platinum content of the cathode catalyst layer was 0.60 mg/cm$^2$.

Next, catalyst ink 2 was coated in the same manner onto the other main side of the polymer electrolyte membrane 1 to form polymer layer a and catalyst ink 3 was coated onto polymer layer a to form polymer layer b, thus producing an anode catalyst layer having polymer layer a and polymer layer b laminated in that order on the main side of the polymer electrolyte membrane 1. A MEA was thus obtained. The platinum contents of polymer layer a and polymer layer b were calculated from the composition of each catalyst ink, the weight of the coated catalyst ink and the size of the layer. As a result, the platinum contents of polymer layer a and polymer layer b were both 0.08 mg/cm$^2$.

<Assembly of cell for evaluation of solid polymer fuel cell>

A commercially available JARI standard cell was used to assemble a solid polymer fuel cell, in the following manner. First, on the sides of both catalyst layers of the MEA fabricated as described above opposite the sides in contact with the polymer electrolyte membrane 1, there were laminated a pair of carbon cloths as gas diffusion layers, a pair of carbon separators having cut gas passageway grooves, a pair of collectors and a pair of end plates sandwiching the MEA in that order from the inside, and these were clamped with a bolt to assemble a solid polymer fuel cell with an effective membrane area of 25 cm$^2$.

<Evaluation of solid polymer fuel cell>

The solid polymer fuel cell was kept at 80°C while supplying humidified hydrogen to the anode catalyst layer and humidified air to the cathode catalyst layer side. During this time, the back pressure at the gas outlet of the separator on the anode catalyst layer side and cathode catalyst layer side of the solid polymer fuel cell was adjusted to 0.1 MPaG. The humidification of each source gas (hydrogen and air) was carried out by passing the source gas through a bubbler containing water. The water temperature of the hydrogen bubbler was 45°C, the water temperature of the air bubbler was 55°C, the hydrogen gas flow rate was 529 mL/min and the air gas flow rate was 1665 mL/min. The value of the current density was measured when the voltage of the solid polymer fuel cell reached 0.4 V under these conditions, giving a value of 1.71 A/cm$^2$. The resistance value of the solid polymer fuel cell was measured when the current density reached 1.5 A/cm$^2$, giving a value of 4.40 mΩ.

(Comparative Example 1)

<Preparation of polymer electrolyte P3>

After placing 8.47 g of xylene in a flask equipped with a reflux condenser tube under an argon atmosphere, it was heated to 90°C in an oil bath. Next, a mixture of 4.47 g of styrene, 4.02 g of acrylonitrile and 0.014 g of benzoyl peroxide was added dropwise over a period of 2 hours into a flask containing xylene. Upon completion of the dropwise addition, the mixture was stirred at 90°C for 2 hours and the flask was slowly cooled to room temperature to obtain a reaction mixture. The reaction mixture was poured into 200 g of methanol to precipitate a polymer. The precipitated polymer was recovered by filtration, rinsed with methanol and dried at 80°C to obtain 7.92 g of a poly(acrylonitrile-styrene) copolymer. The number-average molecular weight of the poly(acrylonitrile-styrene) copolymer was 91,000, and the weight-average molecular weight was 170,000.

After placing 20 mL of 1,2-dichloroethane and 1.00 g of poly(acrylonitrile-styrene) copolymer into a flask equipped with a reflux condenser tube under an argon atmosphere, the temperature was raised to 60°C in an oil bath to dissolve the poly(acrylonitrile-styrene) copolymer. Next, 0.56 g of chlorosulfonic acid was added dropwise into the flask over a period of 5 minutes, and after stirring at 60°C for 1 hour, the flask was slowly cooled to room temperature and the obtained reaction mixture was poured into 200 g of ice water to precipitate a polymer. The precipitated polymer was recovered by filtration and immersed for 1 hour in 200 g of water, and then it was washed with a large amount of water and dried at 80°C to obtain 1.25 g of a sulfonated poly(acrylonitrile-styrene) copolymer (polymer electrolyte P3).

A film (layer) was formed from polymer electrolyte P3 and the ion-exchange capacity (IEC, units: meq/g) was calculated, in the same manner as for formation of the film (layer) from the polymer electrolyte P1 and calculation of the ion-exchange capacity. As a result, the ion-exchange capacity of the film (layer) obtained from the polymer electrolyte P3 was 1.56 meq/g.

<Preparation of catalyst ink 4>

Polymer electrolyte P3 was mixed into a mixed solvent of ethanol and water (ethanol:water = 1:1 (volume ratio)) to a concentration of 1 wt%. With 10.00 g of the obtained mixture there were mixed 0.50 g of platinum-supporting carbon (platinum loading weight: 50 wt%), 2.10 g of water and 14.20 g of ethanol. The obtained mixture was subjected to ultrasonic treatment for 1 hour and then stirred for 5 hours with a stirrer to obtain catalyst ink 4.

<Preparation of catalyst ink 5>

To 6.30 g of a commercially available 5 wt% Nafion solution (product of Aldrich Co., trade name: Nafion perfluorinated ion-exchange resin, 5 wt% soln in lower aliphatic alcohols/$H_2O$ mix, EW: 1000, ion-exchange capacity: 1.0 meq/g) there was added 1.00 g of platinum-supporting carbon (platinum loading weight: 50 wt%), and then 6.46 g of water and 55.35 g of ethanol were added. The obtained mixture was subjected to ultrasonic treatment for 1 hour and then stirred for 5 hours with a stirrer to obtain catalyst ink 5.

A film (layer) was formed from catalyst ink 5 and the ion-exchange capacity (IEC, units: meq/g) was calculated, in the same manner as for formation of the film (layer) from the polymer electrolyte P1 and calculation of its ion-exchange capacity. As a result, the ion-exchange capacity of the film (layer) obtained from catalyst ink 5 was 0.24 meq/g.

<Fabrication of MEA>

A MEA was fabricated in the same manner as Example 1, except that catalyst ink 4 was used instead of catalyst ink 1 to form the cathode catalyst layer on the main side of the polymer electrolyte membrane 1, and catalyst ink 5 was used instead of catalyst inks 2 and 3 to form the anode catalyst layer on the other main side of the polymer electrolyte membrane 1. The amount of platinum in the cathode catalyst layer was 0.60 mg/cm$^2$, based on calculation from the composition of the catalyst ink 4, the weight of the coated catalyst ink 4 and the size of the cathode catalyst layer. Also, the amount of platinum in the anode catalyst layer was 0.16 mg/cm$^2$, based on calculation from the composition of the catalyst ink 5, the weight of the coated catalyst ink 5 and the size of the anode catalyst layer.

In this MEA, the anode catalyst layer was a monolayer and the polymer in the anode catalyst layer was Nafion. Since Nafion can be considered as a random copolymer from the viewpoint of production, the anode catalyst layer contained a random copolymer.

<Assembly of solid polymer fuel cell, and evaluation of solid polymer fuel cell>

A solid polymer fuel cell was assembled using the MEA described above and the solid polymer fuel cell was evaluated, in the same manner as Example 1. The value of the current density was measured when the voltage of the solid polymer fuel cell reached 0.4 V, giving a value of 1.58 A/cm$^2$. The resistance value of the solid polymer fuel cell was measured when the current density reached 1.5 A/cm$^2$, giving a value of 5.06 m$\Omega$.

(Comparative Example 2)

<Fabrication of MEA>

A MEA was fabricated in the same manner as Example 1, except that catalyst ink 3 was used instead of catalyst ink 2, and catalyst ink 2 was used instead of catalyst ink 3 to form the anode catalyst layer.

<Assembly of solid polymer fuel cell, and evaluation of solid polymer fuel cell>

A solid polymer fuel cell was assembled using the MEA described above and the solid polymer fuel cell was evaluated, in the same manner as Example 1. The value of the current density was measured when the voltage of the solid polymer fuel cell reached 0.4 V, giving a value of 0.56 A/cm$^2$. The resistance value of the solid polymer fuel cell was measured when the current density reached 1.5 A/cm$^2$, giving a value of $\geq$17 m$\Omega$.

[Table 6]

| | Polymer in polymer layer of anode catalyst layer | | Current density ($A/cm^2$) (*1) | Cell resistance (mΩ) (*2) |
|---|---|---|---|---|
| | Gas diffusion layer-side polymer layer | Polymer electrolyte membrane-side polymer layer | | |
| Example 1 | 90 wt% Block copolymer 10 wt% Random copolymer | 100 wt% Random copolymer | 1.71 | 4.40 |
| Comp. Ex. 1 | 100 wt% Random copolymer | | 1.58 | 5.06 |
| Comp. Ex. 2 | 100 wt% Random copolymer | 90 wt% Block copolymer 10 wt% Random copolymer | 0.56 | ≥17 |
| *1: The current density is the value at 0.4 V.<br>*2: The cell resistance is the value at 1.5 $A/cm^2$. | | | | |

The evaluation results for the solid polymer fuel cells of the examples and comparative examples are shown in Table 6. The solid polymer fuel cells comprising, on the anode catalyst layer, a layer containing a block copolymer on the anode side gas diffusion layer side and a layer containing a random copolymerizing polymer on the polymer electrolyte membrane side, exhibited low cell resistance and high current density. The electric power generation performance was therefore excellent.

**Industrial Applicability**

According to the invention it is possible to provide a membrane-electrode assembly with satisfactorily excellent electric power generation performance that is easy to produce, as well as a membrane-electrode-gas diffusion layer assembly and a solid polymer fuel cell each comprising the same.

**Claims**

**1.** A membrane-electrode assembly, comprising:

an anode catalyst layer;
a cathode catalyst layer which is opposed to the anode catalysts layer; and
a polymer electrolyte membrane formed between the anode catalyst layer and the cathode catalyst layer,
wherein the anode catalyst layer comprises a plurality of polymer layers containing a polymer in which a repeating unit (a) with an ion-exchange group and a repeating unit (b) with no ion-exchange group are arranged in a random or block fashion, and the polymer in the polymer layer in closest proximity to the polymer electrolyte membrane is the polymer with the lowest block character of the repeating units (a) and (b).

**2.** A membrane-electrode assembly according to claim 1, wherein the polymer layers containing polymers with lower block character of the repeating units (a) and (b) are situated closer to the polymer electrolyte membrane.

**3.** A membrane-electrode assembly, comprising:

an anode catalyst layer;
a cathode catalyst layer which is opposed to the anode catalysts layer; and
a polymer electrolyte membrane formed between the anode catalyst layer and the cathode catalyst layer,
wherein the anode catalyst layer comprises a plurality of polymer layers containing a random copolymer in which a repeating unit (a) with an ion-exchange group and a repeating unit (b) with no ion-exchange group are arranged in a random fashion and/or a block copolymer in which the repeating units (a) and (b) are arranged in a block fashion, and the polymer layer in closest proximity to the polymer electrolyte membrane is the polymer layer with greatest amount of the random copolymer.

**4.** A membrane-electrode assembly according to claim 3, wherein the polymer layers containing more of the random copolymer are situated closer to the polymer electrolyte membrane.

**5.** A membrane-electrode assembly according to any one of claims 1 to 3, wherein the number of polymer layers is 2.

**6.** A membrane-electrode assembly according to any one of claims 1 to 4, wherein the repeating unit (a) is represented by the following general formula (1).

[Chemical Formula 1]

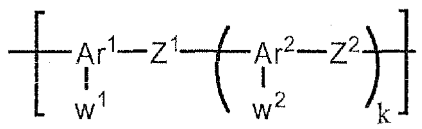

(1)

[In formula (1),
k represents 0 or 1, $Z^1$ and $Z^2$ each independently represent a direct bond or a divalent group, and $Ar^1$ and $Ar^2$ each independently represent a divalent aromatic group.
This is with the provision that the hydrogen in the divalent aromatic group is optionally replaced with optionally substituted C1-20 alkyl, optionally substituted C1-20 alkoxy, optionally substituted C6-20 aryl, optionally substituted C6-20 aryloxy or optionally substituted C2-20 acyl.
Also, $w^1$ and $w^2$ each independently represent hydrogen or an ion-exchange group. This is with the provision that at least one of $w^1$ and $w^2$ is an ion-exchange group.]

**7.** A membrane-electrode assembly according to any one of claims 1 to 4, wherein the repeating unit (b) is represented by the following general formula (2).

[Chemical Formula 2]

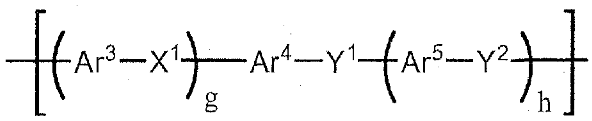

(2)

[ In formula (2),
g and h each independently represent 0 or 1, $X^1$, $Y^1$ and $Y^2$ each independently represent a direct bond or a divalent group, and $Ar^3$, $Ar^4$ and $Ar^5$ each independently represent a divalent aromatic group.
This is with the provision that the hydrogen in the divalent aromatic group is optionally replaced with optionally substituted C1-20 alkyl, optionally substituted C1-20 alkoxy, optionally substituted C6-20 aryl, optionally substituted C6-20 aryloxy or optionally substituted C2-20 acyl.]

**8.** A membrane-electrode assembly according to any one of claims 1 to 4, wherein the polymer electrolyte membrane is a polymer electrolyte membrane comprising a hydrocarbon-based polymer electrolyte.

**9.** A membrane-electrode-gas diffusion layer assembly, comprising:

a membrane-electrode assembly according to any one of claims 1 to 4;
an anode side gas diffusion layer formed on the side of the anode catalyst layer opposite the polymer electrolyte membrane side; and
a cathode side gas diffusion layer formed on the side of the cathode catalyst layer opposite the polymer electrolyte membrane side.

**10.** A solid polymer fuel cell, comprising:

a membrane-electrode-gas diffusion layer assembly according to claim 9;
an anode side separator formed on the side of the anode side gas diffusion layer opposite the anode catalyst

layer side; and
a cathode side separator formed on the side of the cathode side gas diffusion layer opposite the cathode catalyst layer side.

*Fig.1*

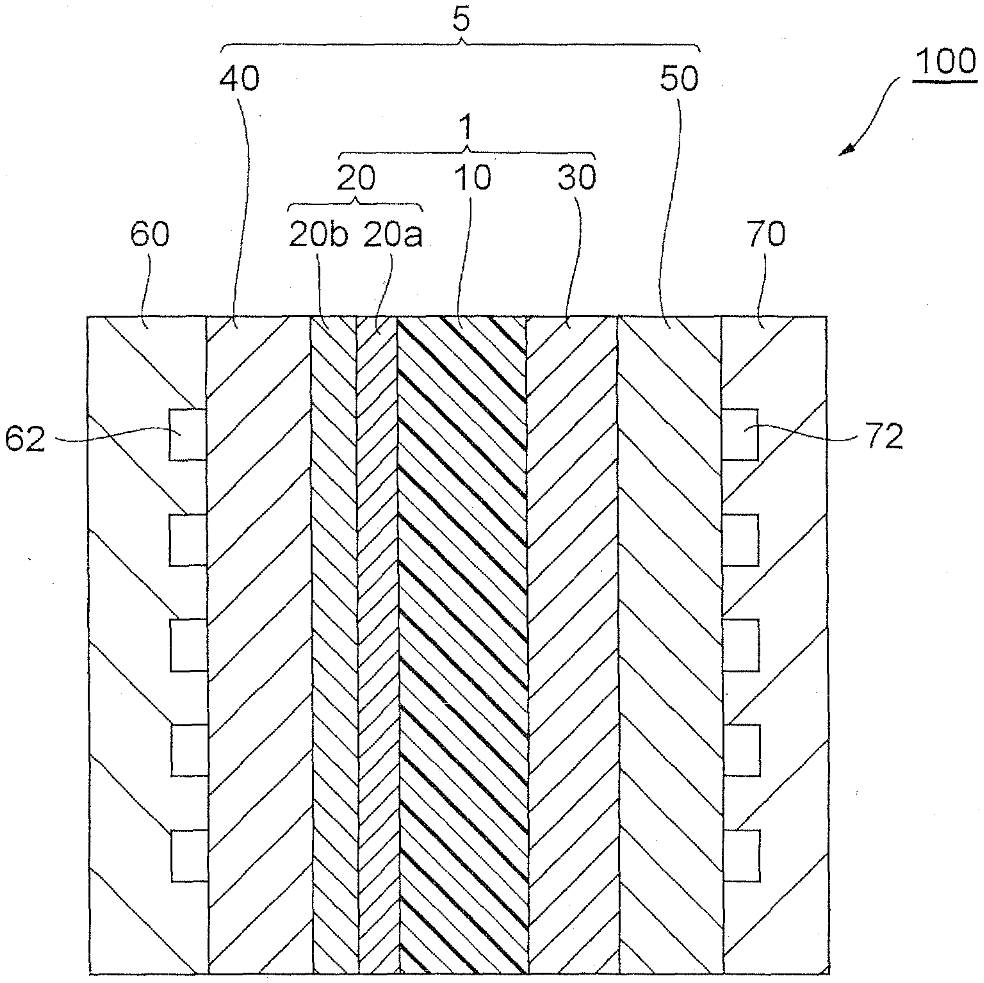

*Fig.2*

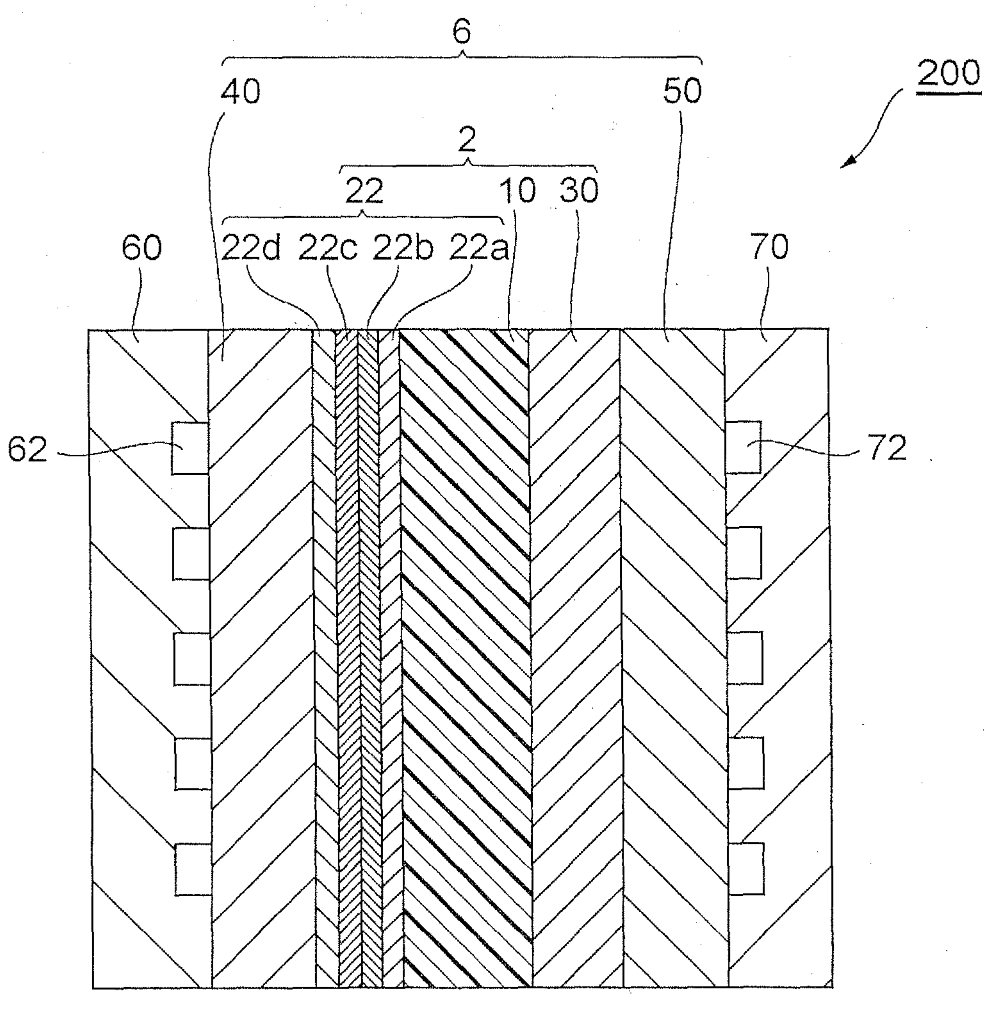

**INTERNATIONAL SEARCH REPORT**

International application No.
PCT/JP2008/060903

A. CLASSIFICATION OF SUBJECT MATTER
*H01M4/86*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M4/86, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-47455 A (Honda Motor Co., Ltd.), 12 February, 2004 (12.02.04), & US 2005/0019649 A1 & EP 1450426 A1 & WO 2003/047018 A1 | 1-10 |
| A | WO 2006/070635 A1 (Nippon Shokubai Co., Ltd.), 06 July, 2006 (06.07.06), (Family: none) | 1-10 |
| A | WO 2007/032541 A1 (Sumitomo Chemical Co., Ltd.), 22 March, 2007 (22.03.07), & JP 2007-109638 A | 1-10 |
| A | JP 2007-59376 A (Toyobo Co., Ltd.), 08 March, 2007 (08.03.07), & EP 1810997 A1 & WO 2006/051748 A1 | 1-10 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 September, 2008 (09.09.08) | 22 September, 2008 (22.09.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/060903

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-134269 A (Toyota Motor Corp.), 30 April, 2004 (30.04.04), & DE 10347457 A | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9180730 A
- JP 2002151090 A
- JP 2005259525 A
- JP 2001250567 A
- JP 2003031232 A
- JP 2004359925 A
- JP 2005232439 A
- JP 2003113136 A
- JP 9102322 A
- US P4012303 A
- US P4605685 A
- JP 11503262 A
- JP 2004089976 A
- JP 2003282096 A


### Non-patent literature cited in the description


- Polymer Science, OnePoint-2 polymer controlled structures. **Adachi, K.** The Society of Polymer Science, Japan. Kyoritsu Publishing, 15 February 1993, 14-15